(19) Europäisches Patentamt
European Patent Office
Office européen des brevets

(11) **EP 2 933 309 B1**

(12) # EUROPEAN PATENT SPECIFICATION

(45) Date of publication and mention of the grant of the patent:
**25.04.2018 Bulletin 2018/17**

(21) Application number: **13863304.5**

(22) Date of filing: **26.11.2013**

(51) Int Cl.:
*C09K 19/34* (2006.01) *C09K 19/12* (2006.01)
*C09K 19/14* (2006.01) *C09K 19/20* (2006.01)
*C09K 19/30* (2006.01) *C09K 19/42* (2006.01)
*G02F 1/13* (2006.01) *C09K 19/02* (2006.01)
*C09K 19/04* (2006.01) *C09K 19/44* (2006.01)

(86) International application number:
**PCT/JP2013/081705**

(87) International publication number:
**WO 2014/091918 (19.06.2014 Gazette 2014/25)**

(54) **LIQUID CRYSTAL COMPOSITION AND LIQUID CRYSTAL DISPLAY DEVICE**

FLÜSSIGKRISTALLZUSAMMENSETZUNG UND FLÜSSIGKRISTALLANZEIGEVORRICHTUNG

COMPOSITION À BASE DE CRISTAUX LIQUIDES ET DISPOSITIF D'AFFICHAGE À BASE DE CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2012 JP 2012273509**

(43) Date of publication of application:
**21.10.2015 Bulletin 2015/43**

(73) Proprietors:
- **JNC Corporation**
  **Chiyoda-ku**
  **Tokyo 100-8105 (JP)**
- **JNC Petrochemical Corporation**
  **Tokyo 100-0004 (JP)**

(72) Inventors:
- **SAITO, Masayuki**
  **Ichihara-shi**
  **Chiba 290-8551 (JP)**
- **YANAI, Takayoshi**
  **Ichihara-shi**
  **Chiba 290-8551 (JP)**

(74) Representative: **Thurston, Joanna**
**Withers & Rogers LLP**
**4 More London Riverside**
**London SE1 2AU (GB)**

(56) References cited:
**EP-A1- 2 757 139** **WO-A1-2011/162142**
**WO-A1-2012/043145** **JP-A- H1 081 679**
**JP-A- 2001 003 053** **JP-A- 2011 052 120**
**JP-A- 2011 514 410** **JP-A- 2011 516 628**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 933 309 B1

## Description

### Technical Field

The invention relates to a liquid crystal composition, a liquid crystal display device including the composition and so forth. In particular, the invention relates to a liquid crystal composition having a positive dielectric anisotropy, and an active matrix (AM) device that includes the composition, and has a mode such as a twisted nematic (TN) mode, an optically compensated bend (OCB) mode, an in-plane switching (IPS) mode, a fringe field switching (FFS) mode, a polymer sustained alignment (PSA) mode or a field-induced photo-reactive alignment (FPA) mode.

### Background Art

In a liquid crystal display device, a classification based on an operating mode for liquid crystals includes a phase change (PC) mode, a twisted nematic (TN) mode, a super twisted nematic (STN) mode, an electrically controlled birefringence (ECB) mode, an optically compensated bend (OCB) mode, an in-plane switching (IPS) mode, a vertical alignment (VA) mode, a fringe field switching (FFS) mode, a polymer sustained alignment (PSA) mode and a field-induced photo-reactive alignment (FPA) mode. A classification based on a driving mode in the device includes a passive matrix (PM) and an active matrix (AM). The PM is classified into static, multiplex and so forth, and the AM is classified into a thin film transistor (TFT), a metal insulator metal (MIM) and so forth. The TFT is further classified into amorphous silicon and polycrystal silicon. The latter is classified into a high temperature type and a low temperature type according to a production process. A classification based on a light source includes a reflective type utilizing natural light, a transmissive type utilizing backlight and a transflective type utilizing both the natural light and the backlight.

The devices include a liquid crystal composition having suitable characteristics. The liquid crystal composition has a nematic phase. General characteristics of the composition should be improved in order to obtain an AM device having good general characteristics. Table 1 below summarizes a relationship of the general characteristics between two aspects. The general characteristics of the composition will be further described based on a commercially available AM device. A temperature range of the nematic phase relates to a temperature range in which the device can be used. A preferred maximum temperature of the nematic phase is about 80°C or higher and a preferred minimum temperature of the nematic phase is about -10°C or lower. Viscosity of the composition relates to a response time in the device. A short response time is preferred for displaying moving images on the device. Accordingly, a small viscosity in the composition is preferred. A small viscosity at a low temperature is further preferred. An elastic constant of the composition relates to contrast in the device. A large elastic constant in the composition is further preferred for increasing the contrast in the device.

Table 1. General Characteristics of Composition and AM Device

| No. | General Characteristics of Composition | General Characteristics of AM Device |
|---|---|---|
| 1 | Wide temperature range of a nematic phase | Wide usable temperature range |
| 2 | Small viscosity[1)] | Short response time |
| 3 | Suitable optical anisotropy | Large contrast ratio |
| 4 | Large positive or negative dielectric an isotropy | Low threshold voltage and small electric power consumption<br>Large contrast ratio |
| 5 | Large specific resistance | Large voltage holding ratio and large contrast ratio |
| 6 | High stability to ultraviolet light and heat | Long service life |
| 7 | Large elastic constant | Large contrast ratio and short response time |
| 1) A liquid crystal composition can be injected into a liquid crystal cell in a shorter period of time. | | |

An optical anisotropy of the composition relates to a contrast ratio in the device. A product ($\Delta n \times d$) of the optical anisotropy ($\Delta n$) of the composition and a cell gap (d) in the device is designed so as to maximize the contrast ratio. A suitable value of the product depends on a type of the operating mode. In a device having the TN mode and so forth, the suitable value is about 0.45 micrometer. In the above case, a composition having a large optical anisotropy is preferred for a device having a small cell gap. A large value of dielectric anisotropy in the composition contributes to a low threshold voltage, a small electric power consumption and a large contrast ratio in the device. Patent literature No.1,

No.2 and No.3 describe liquid crystal compositions having a large dielectric anisotropy. Accordingly, the large value of dielectric anisotropy is preferred. A large specific resistance in the composition contributes to a large voltage holding ratio and a large contrast ratio in the device. Patent literature No. 4 describes a liquid crystal composition which has a particularly high voltage - holding rate in a high temperature area. Accordingly, a composition having a large specific resistance at room temperature and also at a temperature close to the maximum temperature of the nematic phase at an initial stage is preferred. A composition having a large specific resistance at room temperature and also at a temperature close to the maximum temperature of the nematic phase even after the device has been used for a long period of time is preferred. Stability of the composition to ultraviolet light and heat relates to a service life of the liquid crystal display device. In the case where the stability is high, the device has a long service life. Such characteristics are preferred for an AM device for use in a liquid crystal projector, a liquid crystal television and so forth.

A composition having a positive dielectric anisotropy is used for an AM device having the TN mode. On the other hand, a composition having a negative dielectric anisotropy is used for an AM device having the VA mode. A composition having a positive or negative dielectric anisotropy is used for an AM device having the IPS mode or the FFS mode. A composition having a positive or negative dielectric anisotropy is used for an AM device having the PSA mode. Examples of the liquid crystal composition having the positive dielectric anisotropy are disclosed in Patent literature Nos. 5 to 8 or the like.
Also described in the art is a liquid crystal media which has a fast response time and low rotational viscosity (Patent literature No. 9).

## Citation List

### Patent Literature

Patent literature No. 1: JP 2011 052120 A.
Patent literature No. 2: WO 2011/162142 A1.
Patent literature No. 3: EP 2 757 139 A1.
Patent literature No. 4: JP 2001 003 053 A.
Patent literature No. 5: WO 2012/043145 A.
Patent literature No. 6: WO 2011/082742 A.
Patent literature No. 7: JP 2011-514410 A.
Patent literature No. 8: JP H10-081679 A.
Patent literature No. 9: JP 2011 516628 A.

A desirable AM device has characteristics such as a wide temperature range in which the device can be used, a short response time, a large contrast ratio, a low threshold voltage, a large voltage holding ratio and a long service life. A shorter response time even by one millisecond is desirable. Thus, desirable characteristics of the composition include a highmaximum temperature of a nematic phase, a low minimum temperature of the nematic phase, a small viscosity, a suitable optical anisotropy, a large dielectric anisotropy, a large specific resistance, a high stability to ultraviolet light, a high stability to heat and a large elastic constant.

## Summary of Invention

### Technical Problem

One of the aims of the invention is to provide a liquid crystal composition satisfying at least one of characteristics such as a high maximum temperature of a nematic phase, a low minimum temperature of the nematic phase, a small viscosity, a suitable optical anisotropy, a large dielectric anisotropy, a large specific resistance, a high stability to ultraviolet light, a high stability to heat and a large elastic constant. Another aim is to provide a liquid crystal composition having a suitable balance regarding at least two of the characteristics. A further aim is to provide a liquid crystal display device including such a composition. An additional aim is to provide a composition having a suitable optical anisotropy, a large dielectric anisotropy, a high stability to ultraviolet light, a large elastic constant and so forth, and an AM device having characteristics such as a short response time, a large voltage holding ratio, a low threshold voltage, a large contrast ratio and a long service life.

**Solution to Problem**

The present invention concerns a liquid crystal composition that has a nematic phase and contains at least one compound selected from the group of compounds represented by formula (1) as a first component and at least one compound selected from the group of compounds represented by formula (2) as a second component, and a liquid crystal display device including the composition:

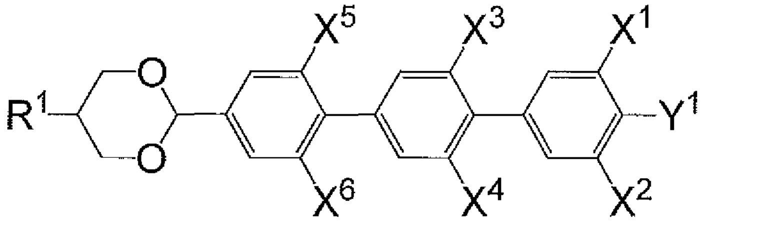

(1)

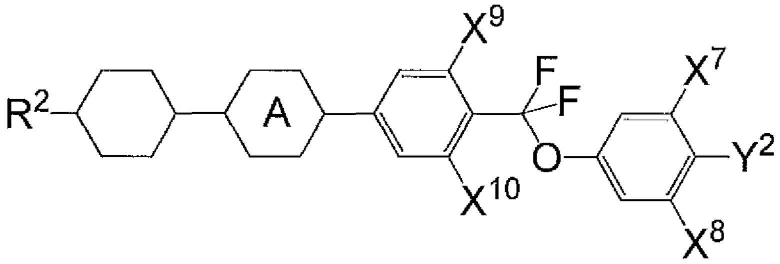

(2)

wherein, $R^1$ and $R^2$ are independently alkyl having 1 to 12 carbons, alkoxy having 1 to 12 carbons or alkenyl having 2 to 12 carbons; ring A is 1,4-phenylene, 2-fluoro-1,4-phenylene or 2,6-difluoro-1,4-phenylene; $X^1$, $X^2$, $X^3$, $X^4$, $X^5$, $X^6$, $X^7$, $X^8$, $X^9$ and $X^{10}$ are independently hydrogen or fluorine; $Y^1$ and $Y^2$ are independently fluorine, chlorine, trifluoromethyl or trifluoromethoxy; with the proviso that the following compositions are excluded:

| | |
|---|---|
| 3-GB(F)B(F)B(F,F)-F | 3% |
| 4-GB(F)B(F,F)XB(F,F)-F | 8% |
| 2-GB(F,F)XB(F)B(F,F)-F | 10% |
| 3-GB(F,F)XB(F)B(F,F)-F | 8% |
| 4-GB(F,F)XB(F)B(F,F)-F | 8% |
| 5-GBB(F)B(F,F)XB(F,F)-F | 3% |
| 6-GB(F)B(F,F)XB(F)B(F,F)-F | 5% |
| 5-HB-CL | 3% |
| 2-HHB-CL | 3% |
| 3-HHB(F,F)-F | 3% |
| 5-HHEB(F,F)-F | 2% |
| 2-HBEB(F,F)-F | 3% |
| 3-HBB(F,F)-F | 5% |
| 3-BB(F)B(F,F)-F | 10% |
| 2-BB(F,F)XB(F,F)-F | 5% |
| 2-HHBB(F,F)-F | 5% |
| 3-HBBXB(F,F)-F | 5% |
| 4-BB(F)B(F,F)XB(F,F)-F | 3% |

(continued)

| | |
|---|---|
| 4-BB(F)B(F,F)XB(F,F)-CF3 | 5% |
| 5-B(F)B(F,F)B(F,F)XB(F,F)-CF3 | 3% |

| | |
|---|---|
| 5-GB(F)B(F)B(F,F)-F | 5% |
| 5-GB(F)B(F,F)XB(F,F)-F | 5% |
| 2-GB(F,F)XB(F)B(F,F)-F | 10% |
| 3-GB(F,F)XB(F)B(F,F)-F | 5% |
| 4-GB(F,F)XB(F)B(F,F)-F | 10% |
| 5-GB(F,F)XB(F)B(F,F)-F | 5% |
| 3-HHB-CL | 5% |
| 3-HHXB(F,F)-F | 7% |
| 5-HBB-F | 3% |
| 3-HBB(F,F)-F | 5% |
| 3-HHBB(F,F)-F | 4% |
| 4-HHBB(F,F)-F | 5% |
| 4-HBBXB(F,F)-F | 5% |
| 4-B(F)B(F,CL)B(F,F)XB(F,F)-F | 7% |
| 5-B(F)B(F,CL)B(F,F)XB(F,F)-F | 8% |
| 6-B(F)B(F,CL)B(F,F)XB(F,F)-CF3 | 8% |
| 6-B(F,CL)B(F,F)XB(F)B(F,F)-F | 3% |

**Advantageous Effects of Invention**

One of advantages of the invention is a liquid crystal composition satisfying at least one of characteristics such as a high maximum temperature of a nematic phase, a low minimum temperature of the nematic phase, a small viscosity, a suitable optical anisotropy, a large dielectric anisotropy, a large specific resistance, a high stability to ultraviolet light and a high stability to heat and a large elastic constant. One aspect of the invention is a liquid crystal composition having a suitable balance regarding at least two of the characteristics. Another aspect is a liquid crystal display device including such a composition. Additional aspect is a composition having characteristics such as a suitable optical anisotropy, a large dielectric anisotropy and a high stability to ultraviolet light, and an AM device having characteristics such as a short response time, a large voltage holding ratio, a low threshold voltage, a large contrast ratio and a long service life.

**Description of Embodiments**

Usage of terms herein is as described below. A liquid crystal composition or a liquid crystal display device may be occasionally abbreviated as "composition" or "device," respectively. The liquid crystal display device is a generic term for a liquid crystal display panel and a liquid crystal display module . "Liquid crystal compound" means a compound having a liquid crystal phase such as a nematic phase and a smectic phase, or a compound having no liquid crystal phase but being useful as a component of the composition. Such a useful compound has a 6-membered ring such as 1,4-cyclohexylene and 1,4-phenylene, and rod-like molecular structure. An optically active compound or a polymerizable compound may be added to the composition. At least one compound selected from the group of compounds represented by formula (1) may be occasionally abbreviated as "compound (1)." "Compound (1)" means one compound or two or more compounds represented by formula (1). A same rule applies to any other compound represented by any other formula . An expression "at least one of hydrogen is replaced by fluorine" means that the number and a position of fluorine for replacement may be selected without restriction.

A maximum temperature of the nematic phase may be occasionally abbreviated as "maximum temperature."

A minimum temperature of the nematic phase may be occasionally abbreviated as "minimum temperature." An expression "having a large specific resistance" means that the composition has a large specific resistance at room temperature and also at a temperature close to the maximum temperature of the nematic phase in an initial stage, and that the composition has a large specific resistance at room temperature and also at a temperature close to the maximum temperature of the nematic phase even after the device has been used for a long period of time. An expression "having a large voltage holding ratio" means that the device has a large voltage holding ratio at room temperature and also at a temperature close to the maximum temperature of the nematic phase in an initial stage, and that the device has a large voltage holding ratio at room temperature and also at a temperature close to the maximum temperature of the nematic phase even after the device has been used for a long period of time. When characteristics such as an optical anisotropy are described, values obtained according to the measuring methods described in Examples will be used. A first component includes one compound or two or more compounds. "Ratio of the first component" is expressed in terms of weight percent (% by weight) of the first component based on the total weight of the liquid crystal composition. A same rule also applies to a ratio of a second component and so forth. A ratio of an additive mixed with the composition is expressed in terms of weight percent (% by weight) or weight parts per million (ppm) based on the total weight of the liquid crystal composition.

A symbol $R^1$ is used for a plurality of compounds in chemical formulas of component compounds. In two of arbitrary compounds among the plurality of compounds, two groups represented by $R^1$ may be identical or different. In one case, for example, $R^1$ of compound (1) is ethyl and $R^1$ of compound (1-1) is ethyl. In another case, $R^1$ of compound (1) is ethyl and $R^1$ of compound (1-1) is propyl. A same rule also applies to a symbol $R^2$, $X^7$, $Y^2$ or the like. In formula (3), when n is 2, two of ring B exist. In the compound, two rings represented by two of ring B may be identical or different. A same rule is also applied to two of arbitrary ring B when n is larger than 2. A same rule is also applied to a symbol such as $Z^1$ and ring D.

Then, 2-fluoro-1,4-phenylene means two divalent groups described below. In a chemical formula, fluorine may be leftward (L) or rightward (R). When only a rightward (R) divalent ring is desirably represented, the ring is expressed, such as 2-fluoro-1,4-phenylene (R). A same rule also applies to a ring having an asymmetrical divalent group, such as tetrahydropyran-2,5-diyl.

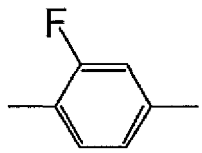

(L)

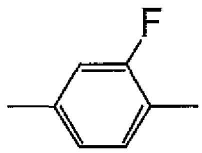

(R)

The invention includes items 1 to 3, 5, 8 to 10, 14 to 16, and 20 to 24 described below. Also described are items 4, 6, 7, 11 to 13 and 17 to 19 not of the invention.

Item 1. A liquid crystal composition that has a nematic phase and contains at least one compound selected from the group of compounds represented by formula (1) as a first component and at least one compound selected from the group of compounds represented by formula (2) as a second component:

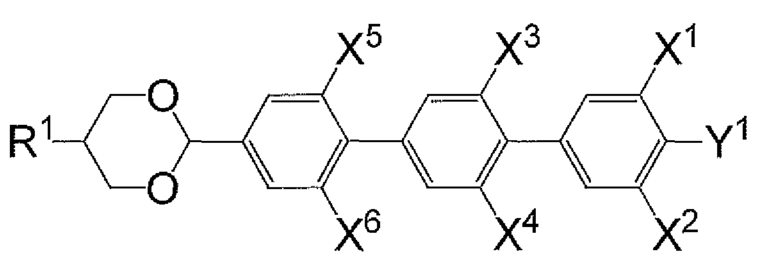

(1)

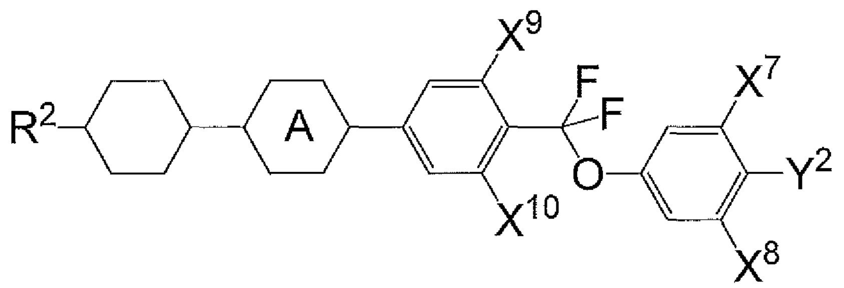

(2)

wherein, $R^1$ and $R^2$ are independently alkyl having 1 to 12 carbons, alkoxy having 1 to 12 carbons or alkenyl having 2 to 12 carbons; ring A is 1,4-phenylene, 2-fluoro-1,4-phenylene or 2,6-difluoro-1,4-phenylene; $X^1$, $X^2$, $X^3$, $X^4$, $X^5$, $X^6$, $X^7$, $X^8$, $X^9$ and $X^{10}$ are independently hydrogen or fluorine; and $Y^1$ and $Y^2$ are independently fluorine, chlorine, trifluoromethyl or trifluoromethoxy ; with the proviso that the following compositions are excluded:

| | |
|---|---|
| 3-GB(F)B(F)B(F,F)-F | 3% |
| 4-GB(F)B(F,F)XB(F,F)-F | 8% |
| 2-GB(F,F)XB(F)B(F,F)-F | 10% |
| 3-GB(F,F)XB(F)B(F,F)-F | 8% |
| 4-GB(F,F)XB(F)B(F,F)-F | 8% |
| 5-GBB(F)B(F,F)XB(F,F)-F | 3% |
| 6-GB(F)B(F,F)XB(F)B(F,F)-F | 5% |
| 5-HB-CL | 3% |
| 2-HHB-CL | 3% |
| 3-HHB(F,F)-F | 3% |
| 5-HHEB(F,F)-F | 2% |
| 2-HBEB(F,F)-F | 3% |
| 3-HBB(F,F)-F | 5% |
| 3-BB(F)B(F,F)-F | 10% |
| 2-BB(F,F)XB(F,F)-F | 5% |
| 2-HHBB(F,F)-F | 5% |
| 3-HBBXB(F,F)-F | 5% |
| 4-BB(F)B(F,F)XB(F,F)-F | 3% |
| 4-BB(F)B(F,F)XB(F,F)-CF3 | 5% |
| 5-B(F)B(F,F)B(F,F)XB(F,F)-CF3 | 3% |

| | |
|---|---|
| 5-GB(F)B(F)B(F,F)-F | 5% |
| 5-GB(F)B(F,F)XB(F,F)-F | 5% |
| 2-GB(F,F)XB(F)B(F,F)-F | 10% |
| 3-GB(F,F)XB(F)B(F,F)-F | 5% |
| 4-GB(F,F)XB(F)B(F,F)-F | 10% |
| 5-GB(F,F)XB(F)B(F,F)-F | 5% |
| 3-HHB-CL | 5% |

(continued)

| | |
|---|---|
| 3-HHXB(F,F)-F | 7% |
| 5-HBB-F | 3% |
| 3-HBB(F,F)-F | 5% |
| 3-HHBB(F,F)-F | 4% |
| 4-HHBB(F,F)-F | 5% |
| 4-HBBXB(F,F)-F | 5% |
| 4-B(F)B(F,CL)B(F,F)XB(F,F)-F | 7% |
| 5-B(F)B(F,CL)B(F,F)XB(F,F)-F | 8% |
| 6-B(F)B(F,CL)B(F,F)XB(F,F)-CF3 | 8% |
| 6-B(F,CL)B(F,F)XB(F)B(F,F)-F | 3% |

Item 2. The liquid crystal composition according to item 1, containing at least one compound selected from the group of compounds represented by formula (1-1) to formula (1-9) as the first component:

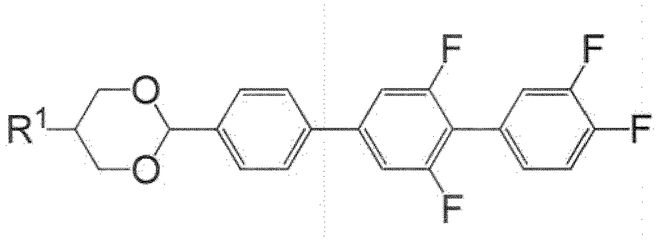

(1-1)

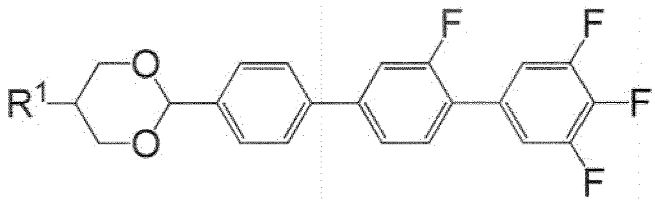

(1-2)

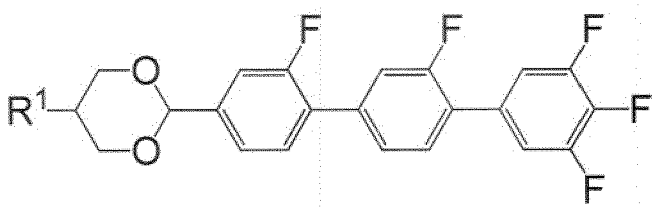

(1-3)

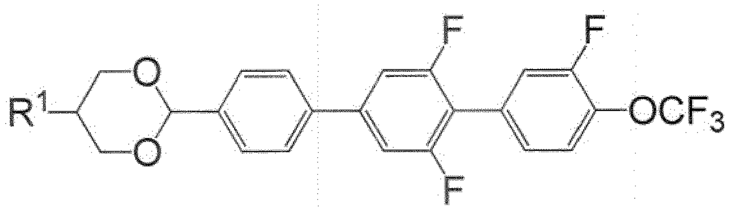

(1-4)

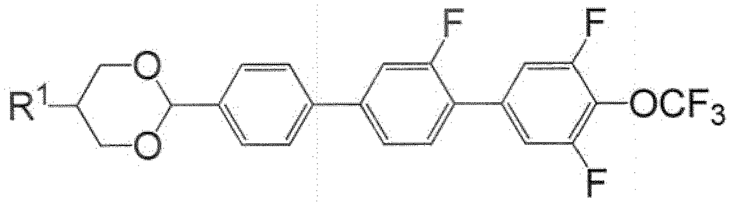

(1-5)

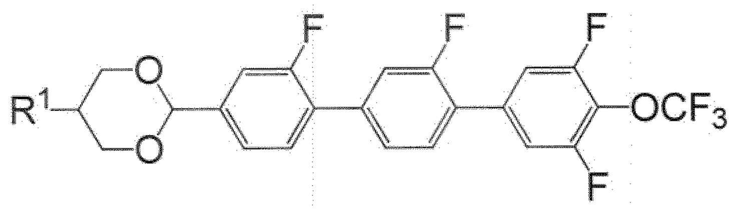

(1-6)

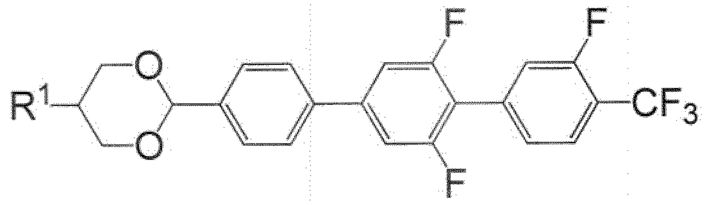

(1-7)

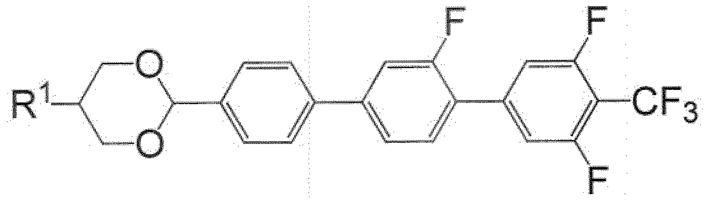

(1-8)

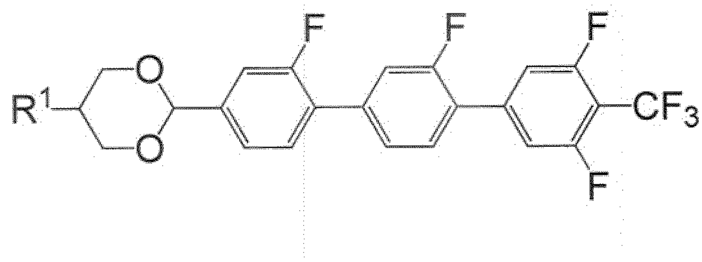

(1-9)

wherein, $R^1$ is alkyl having 1 to 12 carbons, alkoxy having 1 to 12 carbons or alkenyl having 2 to 12 carbons.

Item 3. The liquid crystal composition according to item 1 or 2, wherein the first component is at least one compound selected from the group of the compounds represented by formula (1-2) according to item 2.

Item 4. Also described is a liquid crystal composition according to any one of items 1 to 3, wherein the first component is at least one compound selected from the group of compounds represented by formula (1-8) according to item 2.

Item 5. The liquid crystal composition according to any one of items 1 to 3, containing at least one compound selected from the group of compounds represented by formula (2-1) to formula (2-3) as the second component:

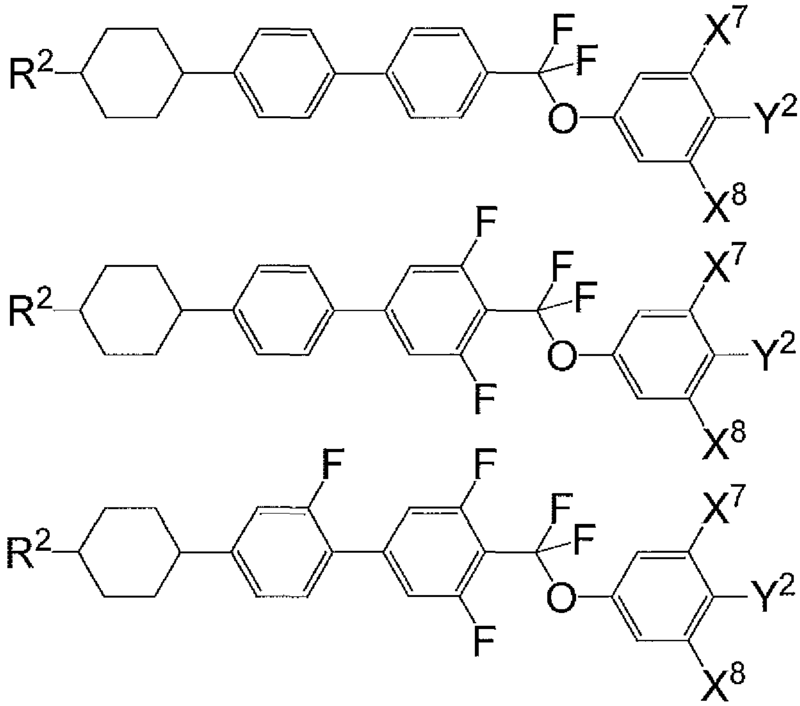

(2-1)

(2-2)

(2-3)

wherein, $R^2$ is alkyl having 1 to 12 carbons, alkoxy having 1 to 12 carbons or alkenyl having 2 to 12 carbons ; $X^7$ and $X^8$ are independently hydrogen or fluorine; and $Y^2$ is fluorine, chlorine, trifluoromethyl or trifluoromethoxy.

Item 6. Also described is a liquid crystal composition according to any one of items 1 to 5, wherein the second component is at least one compound selected from the group of compounds represented by formula (2-1) according to item 5.

Item 7. Also described is a liquid crystal composition according to any one of items 1 to 6, wherein the second component is at least one compound selected from the group of compounds represented by formula (2-2) according to item 5.

Item 8. The liquid crystal composition according to any one of items 1 to 3, and 5, wherein a ratio of the first component is in the range of 5% by weight to 30% by weight and a ratio of the second component is in the range of 5% by weight to 30% by weight, based on the total weight of the liquid crystal composition.

Item 9. The liquid crystal composition according to any one of items 1 to 3, 5 and 8, containing at least one compound selected from the group of compounds represented by formula (3) as a third component:

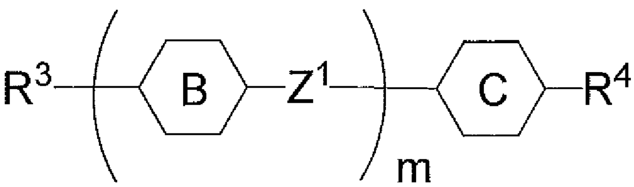

(3)

wherein, $R^3$ and $R^4$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine; ring B and ring C are independently 1,4-cyclohexylene, 1,4-phenylene, 2-fluoro-1,4-phenylene or 2,5-difluoro-1,4-phenylene; $Z^1$ is a single bond, ethylene or carbonyloxy; and m is 1, 2 or 3.

Item 10. The liquid crystal composition according to any one of items 1 to 3, 5, 8 and 9, containing at least one compound selected from the group of compounds represented by formula (3-1) to formula (3-13) as the third component:

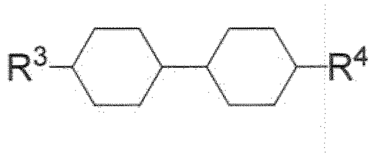

(3-1)

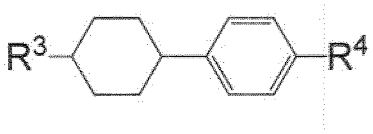

(3-2)

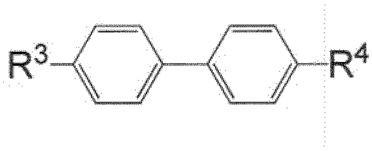

(3-3)

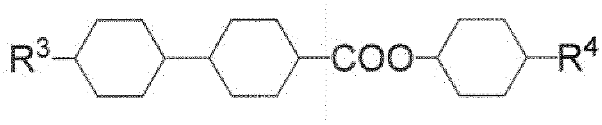

(3-4)

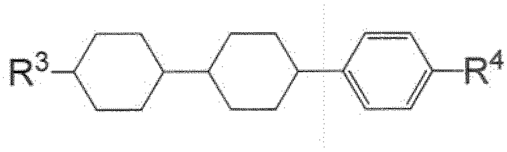

(3-5)

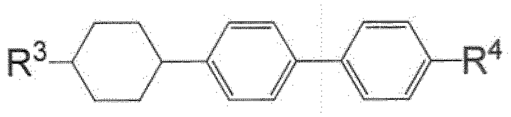

(3-6)

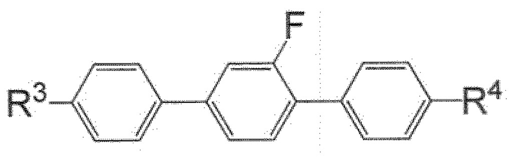

(3-7)

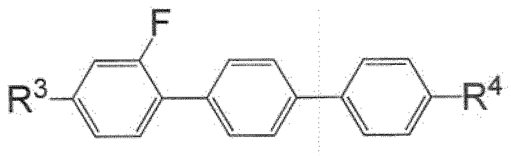

(3-8)

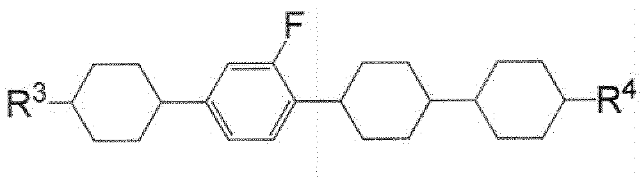

(3-9)

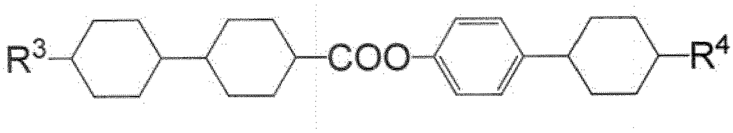

(3-10)

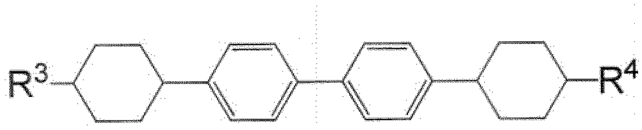

(3-11)

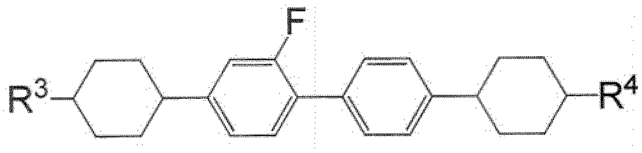

(3-12)

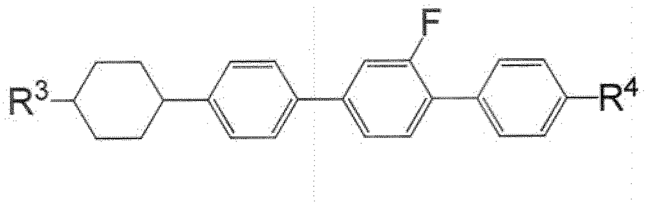

(3-13)

wherein, $R^3$ and $R^4$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine.

Item 11. Also described is a liquid crystal composition according to items 1 to 10, wherein the third component is at least one compound selected from the group of compounds represented by formula (3-1) according to item 10.

Item 12. Also described is a liquid crystal composition according to any one of items 1 to 11, wherein the third component is at least one compound selected from the group of compounds represented by formula (3-5) according to item 10.

Item 13. Also described is a liquid crystal composition according to any one of items 1 to 12, wherein the third component is at least one compound selected from the group of compounds represented by formula (3-7) according to item 10.

Item 14. The liquid crystal composition according to any one of items 9 and 10, wherein a ratio of the third component is in the range of 30% by weight to 80% by weight based on the total weight of the liquid crystal composition.

Item 15. The liquid crystal composition according to any one of items 1 to 3, 5, 8 to 10, and 14, containing at least one compound selected from the group of compounds represented by formula (4) as a fourth component:

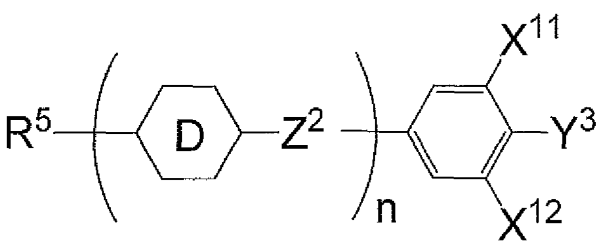

(4)

wherein, $R^5$ is alkyl having 1 to 12 carbons, alkoxy having 1 to 12 carbons or alkenyl having 2 to 12 carbons; ring D is 1, 4-phenylene, 2-fluoro-1,4-phenylene, 2,6-difluoro-1,4-phenylene, tetrahydropyran-2,5-diyl or pyrimidine-2,5-diyl; $Z^2$ is a single bond, ethylene, carbonyloxy or difluoromethyleneoxy; $X^{11}$ and $X^{12}$ are independently hydrogen or fluorine; $Y^3$ is fluorine, chlorine, trifluoromethyl or trifluoromethoxy; and n is 1, 2, 3 or 4, ring D when n is 1 or 2 may be 1, 4-cyclohexylene or 1, 3-dioxane-2, 5-diyl, and ring D when n is 3 or 4 and at least one of $Z^2$ is not a single bond may be 1,3-dioxane-2,5-diyl.

Item 16. The liquid crystal composition according to any one of items 1 to 3, 5, 8 to 10, and 14 to 15, wherein the fourth component is at least one compound selected from the group of compounds represented by formula (4-1) to formula (4-22):

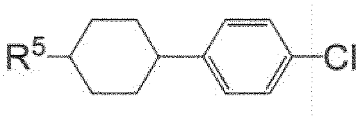

(4-1)

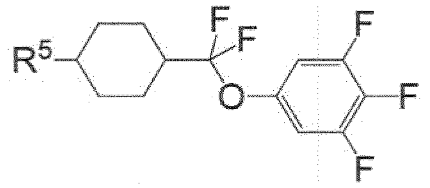

(4-2)

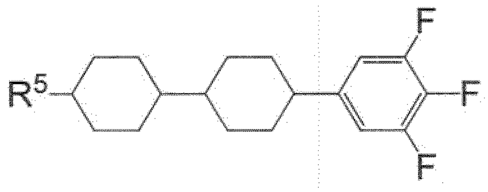

(4-3)

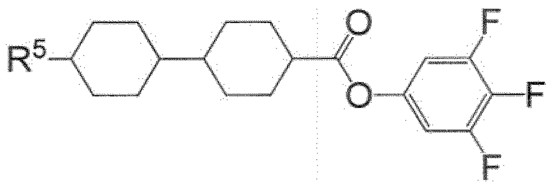

(4-4)

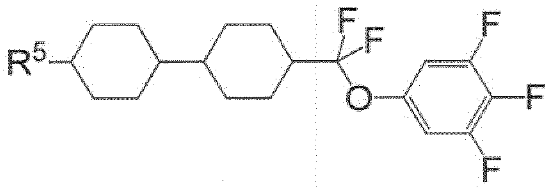

(4-5)

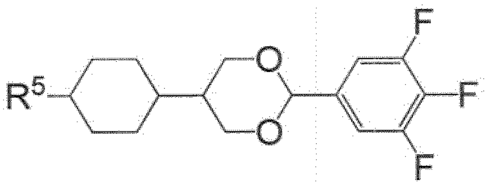

(4-6)

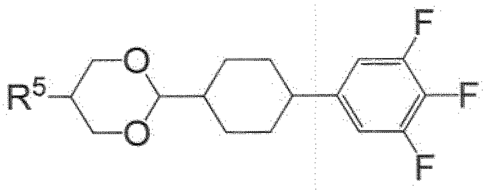

(4-7)

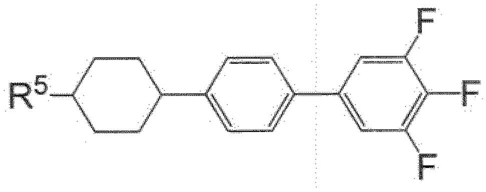

(4-8)

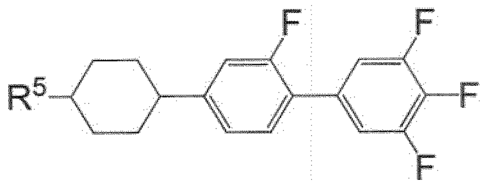

(4-9)

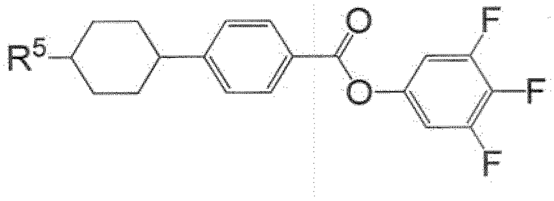

(4-10)

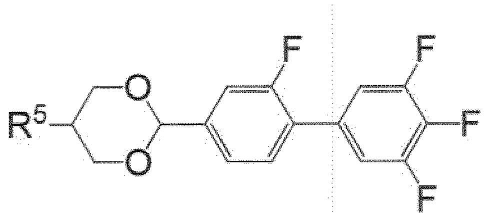

(4-11)

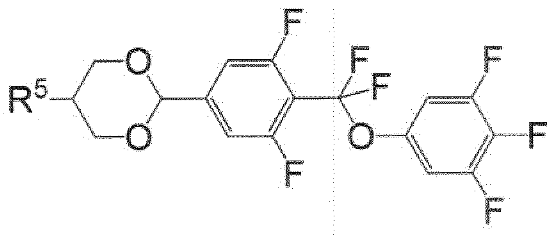

(4-12)

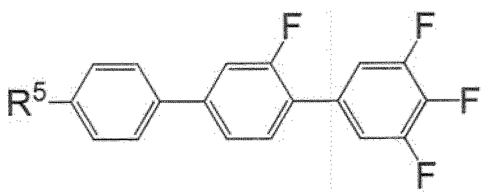

(4-13)

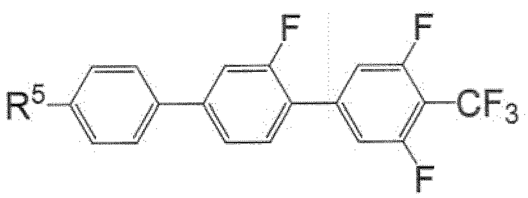

(4-14)

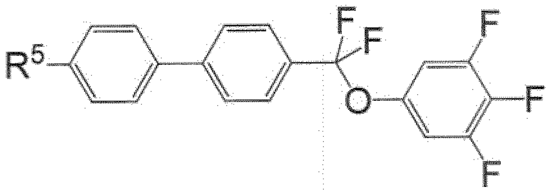

(4-15)

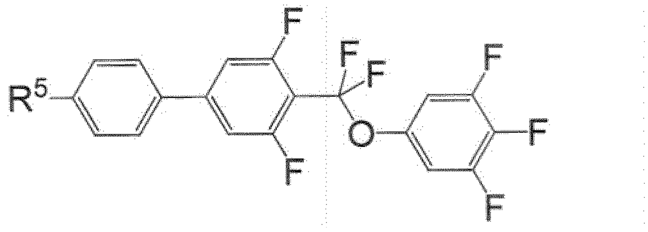

(4-16)

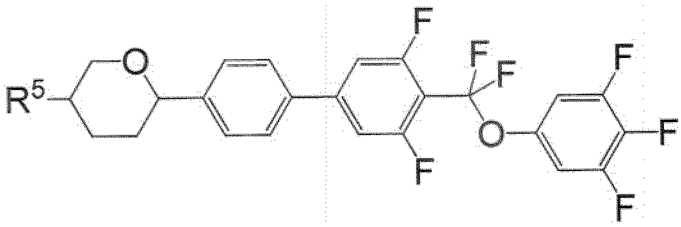

(4-17)

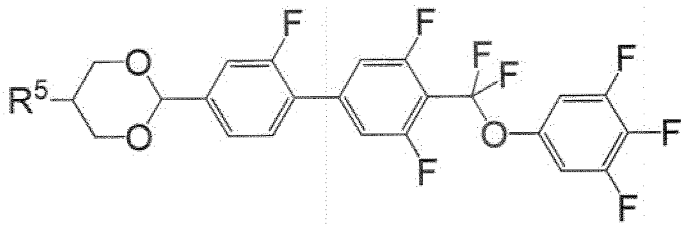

(4-18)

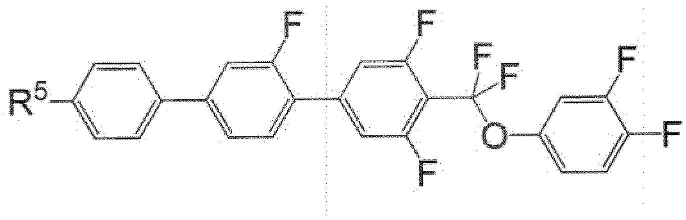

(4-19)

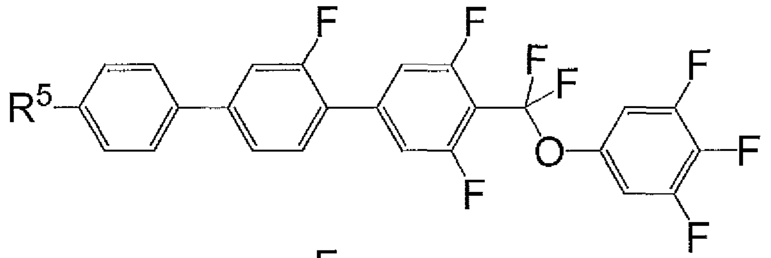

(4-20)

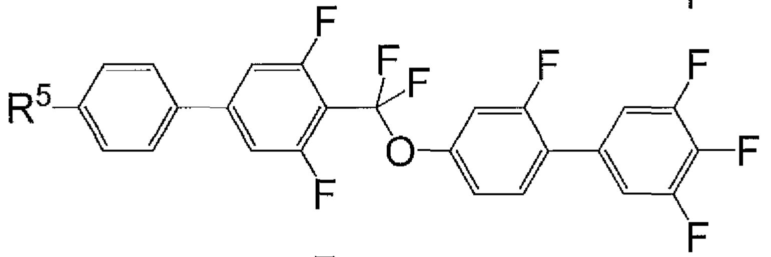

(4-21)

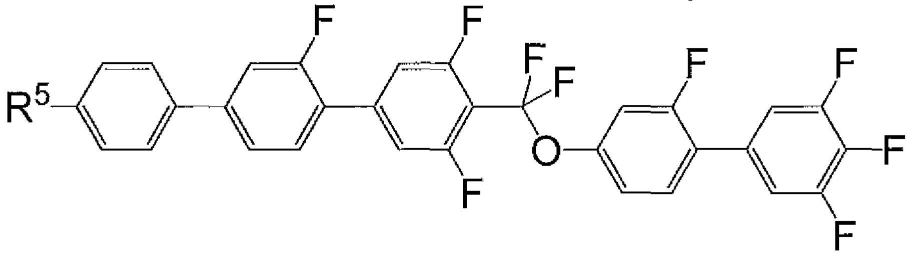

(4-22)

wherein, $R^5$ is alkyl having 1 to 12 carbons, alkoxy having 1 to 12 carbons or alkenyl having 2 to 12 carbons.

Item 17. Also described is a liquid crystal composition according to any one of items 1 to 16, wherein the fourth component is at least one compound selected from the group of compounds represented by formula (4-11) to formula (4-16) according to item 16.

Item 18. Also described is a liquid crystal composition according to any one of items 1 to 17, wherein the fourth component is at least one compound selected from the group of compounds represented by formula (4-18) according to item 16.

Item 19. Also described is a liquid crystal composition according to any one of items 1 to 18, wherein the fourth component is at least one compound selected from the group of compounds represented by formula (4-20) according to item 16.

Item 20. The liquid crystal composition according to any one of items 15 and 16, wherein a ratio of the fourth component is in the range of 10% by weight to 50% by weight based on the total weight of the liquid crystal composition.

Item 21. The liquid crystal composition according to any one of items 1 to 3, 5, 8 to 10, 14 to 16, and 20, wherein a maximum temperature of a nematic phase is 80°C or higher, an optical anisotropy (measured at 25°C) at a wavelength of 589 nanometers is 0.07 or more, and a dielectric anisotropy (measured at 25°C) at a frequency of 1 kHz is 10 or more.

Item 22. A liquid crystal display device, including the liquid crystal composition according to any one of items 1 to 3, 5, 8 to 10, 14 to 16, and 20 to 21.

Item 23. The liquid crystal display device according to item 22, wherein an operating mode in the liquid crystal display device includes a TN mode, an ECB mode, an OCB mode, an IPS mode, a PSA mode or an FPA mode, and a driving mode in the liquid crystal display device incldues an active matrix mode.

Item 24. Use of the liquid crystal composition according to any one of items 1 to 3, 5, 8 to 10, 14 to 16, 20 and 21 in a liquid crystal display device.

The invention further includes the following items: (1) the composition, further containing the optically active compound; (2) the composition, further containing the additive such as an antioxidant, an ultraviolet light absorber, an antifoaming agent, a polymerizable compound and a polymerization initiator; (3) an AM device including the composition; (4) a device including the composition and having a TN mode, an ECB mode, an OCB mode, an IPS mode, an FFS mode, a PSA mode or an FPA mode; (5) a transmissive device including the composition; (6) use of the composition as the composition having the nematic phase; (7) use thereof as an optically active composition by adding the optically active compound to the composition.

The composition of the invention will be described in the following order. First, a constitution of the component compounds in the composition will be described. Second, main characteristics of the component compounds and main effects of the compounds on the composition will be described. Third, a combination of components in the composition, a preferred ratio of the components and the basis thereof will be described. Fourth, a preferred embodiment of the

component compounds will be described. Fifth, specific examples of the component compounds will be shown. Sixth, an additive that may be mixed with the composition will be described. Seventh, methods for synthesizing the component compounds will be described. Last, an application of the composition will be described.

First, the constitution of the component compounds in the composition will be described. The composition of the invention is classified into composition A and composition B. Composition A may further contain any other liquid crystal compound, an additive, an impurity or the like in addition to the liquid crystal compound selected from compound (1), compound (2), compound (3) and compound (4). "Any other liquid crystal compound" means a liquid crystal compound different from compound (1), compound (2), compound (3) and compound (4). Such a compound is mixed with the composition for the purpose of further adjusting the characteristics. The additive includes the optically active compound, the antioxidant, the ultraviolet light absorber, a dye, the antifoaming agent, the polymerizable compound and the polymerization initiator. The impurity includes a compound mixed in a process such as preparation of the component compounds.

Composition B consists essentially of the compound selected from compound (1), compound (2), compound (3) and compound (4). A term "essentially" means that the composition may contain the additive and the impurity, but does not contain any liquid crystal compound different from the above compounds. Composition B has a smaller number of components than composition A has. Composition B is preferred to composition A in view of cost reduction. Composition A is preferred to composition B in view of possibility of further adjusting the characteristics by mixing any other liquid crystal compound.

Second, the main characteristics of the component compounds and the main effects of the compounds on the characteristics of the composition will be described. The main characteristics of the component compounds are summarized in Table 2 on the basis of advantageous effects of the invention. In Table 2, a symbol L stands for "large" or "high," a symbol M stands for "medium," and a symbol S stands for "small" or "low." The symbols L, M and S represent a classification based on a qualitative comparison among the component compounds, and 0 (zero) means "a value is nearly zero."

**Table 2. Characteristics of Compounds**

| Compounds | (1) | (2) | (3) | (4) |
|---|---|---|---|---|
| Maximum temperature | L | M | S to L | S to L |
| Viscosity | M to L | M to L | S to M | M to L |
| Optical anisotropy | L | M | S to L | M to L |
| Dielectric anisotropy | M to L | L | 0 | S to L |
| Specific resistance | L | L | L | L |

Upon mixing the component compounds with the composition, the main effects of the component compounds on the characteristics of the composition are as described below. Compound (1) increases the optical anisotropy and increases the dielectric anisotropy. Compound (2) increases the dielectric anisotropy. Compound (3) increases the maximum temperature or decreases the minimum temperature. Compound (4) decreases the minimum temperature and increases the dielectric anisotropy.

Third, the combination of components in the composition, the preferred ratio of the component compound and the basis thereof will be described. The combination of components in the composition includes a combination of the first component and the second component, a combination of the first component, the second component and the third component, a combination of the first component, the second component and the fourth component, and a combination of the first component, the second component, the third component and the fourth component. A preferred combination of components in the composition includes a combination of the first component, the second component and the third component, and a combination of the first component, the second component, the third component and the fourth component.

A preferred ratio of the first component is 5% by weight or more for increasing the optical anisotropy and the dielectric anisotropy, and 30% by weight or less for decreasing the minimum temperature or decreasing the viscosity. A further preferred ratio is in the range of 5% by weight to 25% by weight. A particularly preferred ratio is in the range of 5% by weight to 20% by weight.

A preferred ratio of the second component is 5% by weight or more for increasing the dielectric anisotropy and 30% by weight or less for decreasing the minimum temperature . A further preferred ratio is in the range of 5% by weight to 25% by weight. A particularly preferred ratio is in the range of 5% by weight to 20% by weight.

A preferred ratio of the third component is 30 % by weight or more for increasing the maximum temperature

or decreasing the viscosity, and 80 % by weight or less for increasing the dielectric anisotropy. A further preferred ratio is in the range of 40% by weight to 70% by weight. A particularly preferred ratio is in the range of 45% by weight to 65% by weight.

The fourth component is particularly suitable for preparation of the composition having a large dielectric anisotropy. A preferred ratio of the component is in the range of 10% by weight to 50% by weight. A further preferred ratio is in the range of 15% by weight to 45% by weight. A particularly preferred ratio is in the range of 20% by weight to 40% by weight.

Fourth, the preferred embodiment of the component compounds will be described.

$R^1$, $R^2$ and $R^5$ are independently alkyl having 1 to 12 carbons, alkoxy having 1 to 12 carbons or alkenyl having 2 to 12 carbons. Preferred $R^1$, $R^2$ or $R^5$ is alkyl having 1 to 12 carbons for increasing the stability to ultraviolet light or heat. $R^3$ and $R^4$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine. Preferred $R^3$ or $R^4$ is alkyl having 1 to 12 carbons for increasing the stability to ultraviolet light or heat or the like and alkenyl having 2 to 12 carbons for decreasing the minimum temperature or decreasing the viscosity.

Preferred alkyl is methyl, ethyl, propyl, butyl, pentyl, hexyl, heptyl or octyl. Further preferred alkyl is ethyl, propyl, butyl, pentyl or heptyl for decreasing the viscosity.

Preferred alkoxy is methoxy, ethoxy, propoxy, butoxy, pentyloxy, hexyloxy or heptyloxy. Further preferred alkoxy is methoxy or ethoxy for decreasing the viscosity.

Preferred alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl includes vinyl, 1-propenyl, 3-butenyl or 3-pentenyl for decreasing the viscosity. A preferred configuration of -CH=CH- in the alkenyl depends on a position of a double bond. Trans is preferred in alkenyl such as 1-propenyl, 1-butenyl, 1-pentenyl, 1-hexenyl, 3-pentenyl and 3-hexenyl for decreasing the viscosity, for instance. Cis is preferred in alkenyl such as 2-butenyl, 2-pentenyl and 2-hexenyl. In the alkenyl, straight-chain alkenyl is preferred to branched-chain alkenyl.

Preferred examples of alkenyl in which at least one of hydrogen is replaced by fluorine include 2,2-difluorovinyl, 3,3-difluoro-2-propenyl, 4,4-difluoro-3-butenyl, 5,5-difluoro-4-pentenyl and 6,6-difluoro-5-hexenyl. Further preferred examples include 2,2-difluorovinyl and 4,4-difluoro-3-butenyl for decreasing the viscosity.

Then, m is 1, 2 or 3. Preferred m is 1 for decreasing the viscosity. Then, n is 1, 2, 3 or 4. Preferred n is 2 for decreasing the minimum temperature.

$Z^1$ is a single bond, ethylene or carbonyloxy, and two of arbitrary $Z^1$ when m is 2 or 3 may be identical or different. Preferred $Z^1$ is a single bond for decreasing the viscosity. $Z^2$ is a single bond, ethylene, carbonyloxy or difluoromethyleneoxy, and two of arbitrary $Z^2$ when n is 2, 3 or 4 may be identical or different. Preferred $Z^2$ is difluoromethyleneoxy for increasing the dielectric anisotropy.

Ring A is 1,4-phenylene, 2-fluoro-1,4-phenylene or 2,6-difluoro-1,4-phenylene. Preferred ring A is 1,4-phenylene for increasing the optical anisotropy. Ring B and ring C are independently 1,4-cyclohexylene, 1,4-phenylene, 2-fluoro-1,4-phenylene or 2,5-difluoro-1,4-phenylene, and two of arbitrary ring B when m is 2 or 3 may be identical or different. Preferred ring B or ring C is 1,4-phenylene for decreasing the viscosity and 1,4-cyclohexylene for increasing the optical viscosity and 1,4-cyclohexylene for increasing the optical anisotropy. Ring D is 1,4-phenylene, 2-fluoro-1,4-phenylene, 2,6-difluoro-1,4-phenylene, tetrahydropyran-2,5-diyl or pyrimidine-2,5-diyl, and two of arbitrary ring D when n is 2, 3 or 4 may be identical or different. Ring D when n is 1 or 2 may be 1,4-cyclohexylene or 1,3-dioxane-2,5-diyl, and when n is 3 or 4 and at least one of $Z^2$ is not a single bond, ring D may be 1,3-dioxane-2,5-diyl. Preferred ring D is 1,4-phenylene or 2-fluoro-1,4-phenylene for increasing the optical anisotropy.

In the chemical formula having ring A or ring D, 2-fluoro-1,4-phenylene (R) is preferred to 2-fluoro-1,4-phenylene (L) with regard to 2-fluoro-1,4-phenylene. A rule of the symbol (L) and (R) is applied as described above. Then, 2-fluoro-1,4-phenylene means two divalent rings described below. In the chemical formula having ring A or ring D, 2,6-difluoro-1,4-phenylene (R) is preferred to 2,6-difluoro-1,4-phenylene (L).

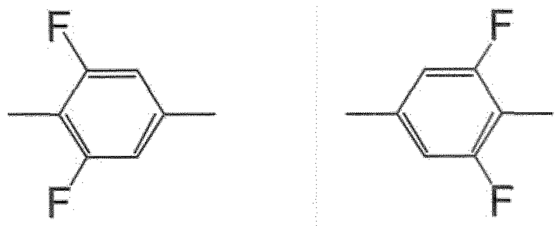

(L) (R)

$X^1$, $X^2$, $X^3$, $X^4$, $X^5$, $X^6$, $X^7$, $X^8$, $X^9$ and $X^{10}$ are independently hydrogen or fluorine. Preferred $X^1$, $X^2$, $X^3$, $X^4$, $X^5$, $X^6$, $X^7$, $X^8$, $X^9$ or $X^{10}$ is fluorine for increasing the dielectric anisotropy.

$Y^1$, $Y^2$ and $Y^3$ are independently fluorine, chlorine, trifluoromethyl or trifluoromethoxy. Preferred $Y^1$, $Y^2$ or $Y^3$ is fluorine for decreasing the minimum temperatyre.

Fifth, the specific examples of the component compounds will be shown. In the preferred compounds described below, $R^6$ and $R^7$ are independently alkyl having 1 to 12 carbons. $R^8$ is alkyl having 1 to 12 carbons or alkoxy having 1 to 12 carbons. $R^9$, $R^{10}$ and $R^{11}$ are independently straight-chain alkyl having 1 to 12 carbons or straight-chain alkenyl having 2 to 12 carbons.

Preferred compound (1) includes compound (1-1-1) to compound (1-9-1). Further preferred compound (1) includes compound (1-1-1), compound (1-2-1), compound (1-4-1), compound (1-5-1) and compound (1-8-1). Particularly preferred compound (1) includes compound (1-2-1), compound (1-5-1) and compound (1-8-1). Preferred compound (2) includes compound (2-1-1) to compound (2-3-1). Further preferred compound (2) includes compound (2-1-1). Preferred compound (3) includes compound (3-1-1) to compound (3-13-1). Further preferred compound (3) includes compound (3-1-1), compound (3-5-1), compound (3-7-1) and compound (3-13-1). Particularly preferred compound (3) includes compound (3-1-1), compound (3-5-1) and compound (3-7-1). Preferred compound (4) includes compound (4-1-1) to compound (4-22-1). Further preferred compound (4) includes compound (4-5-1), compound (4-9-1), compound (4-11-1) to compound (4-16-1), compound (4-18-1) and compound (4-20-1). Particularly preferred compound (4) includes compound (4-13-1), compound (4-14-1), compound (4-15-1), compound (4-16-1) and compound (4-20-1) .

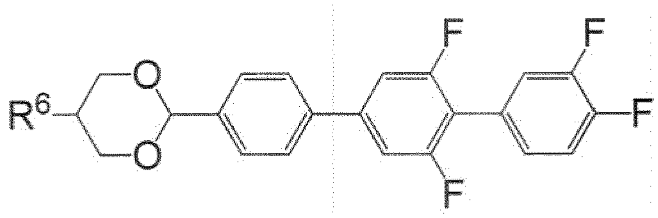

(1-1-1)

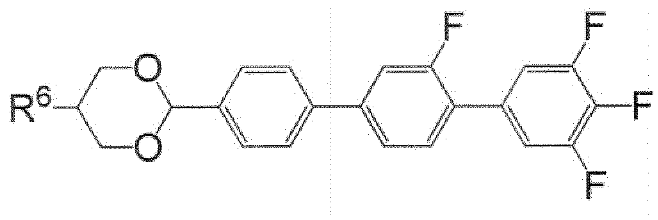

(1-2-1)

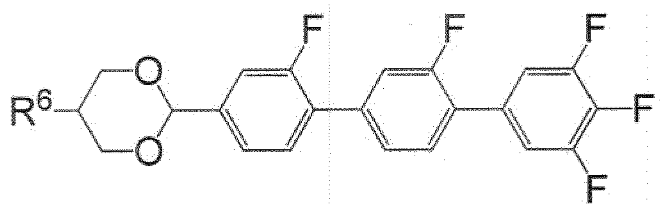

(1-3-1)

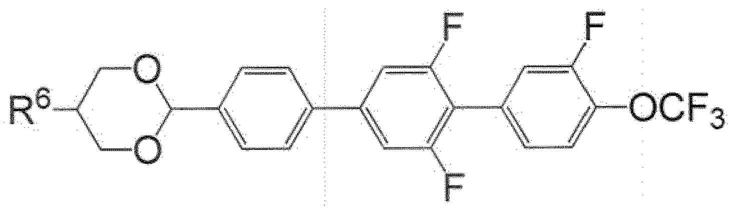

(1-4-1)

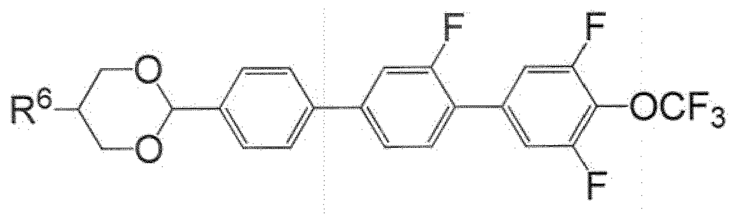

(1-5-1)

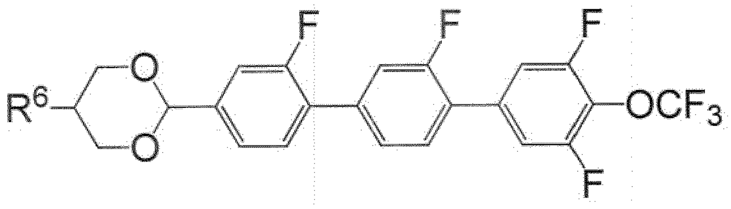

(1-6-1)

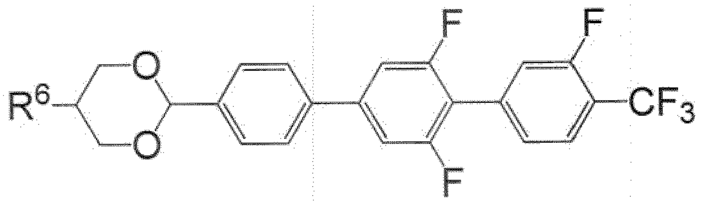

(1-7-1)

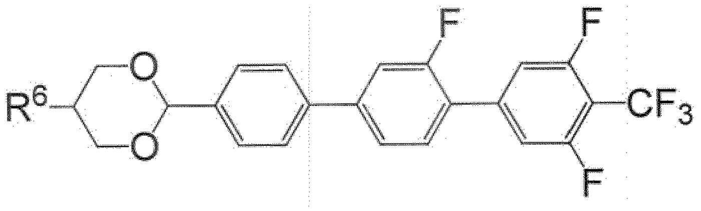

(1-8-1)

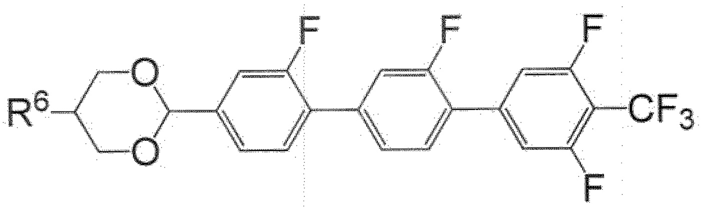

(1-9-1)

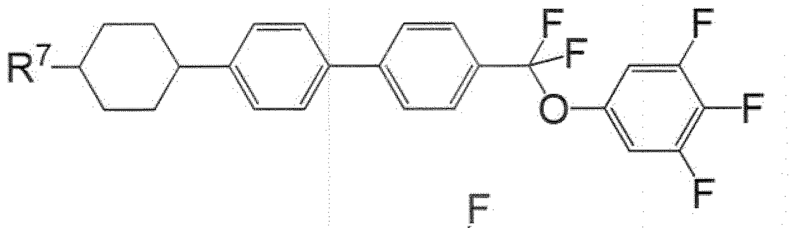

(2-1-1)

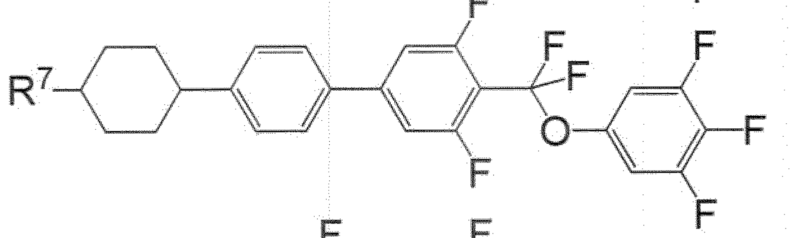

(2-2-1)

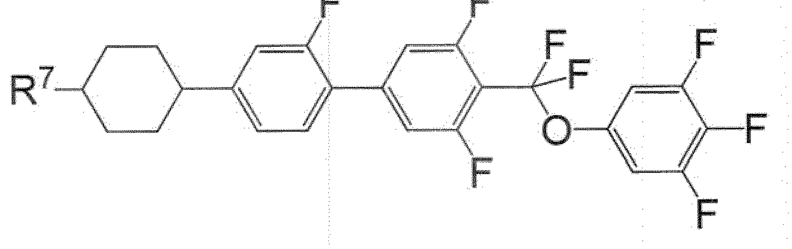

(2-3-1)

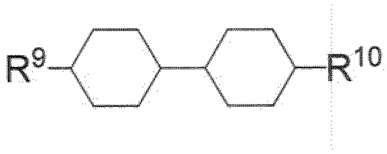

(3-1-1)

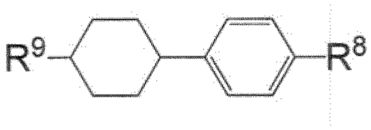

(3-2-1)

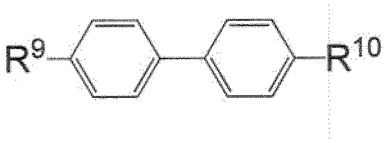

(3-3-1)

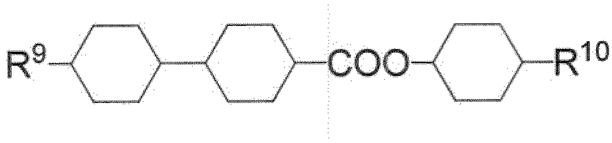

(3-4-1)

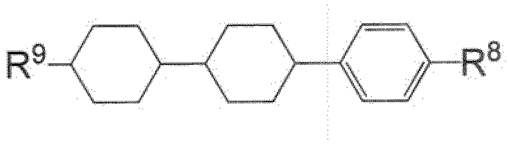

(3-5-1)

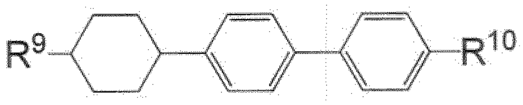

(3-6-1)

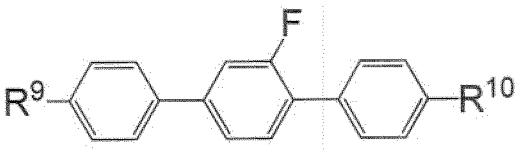

(3-7-1)

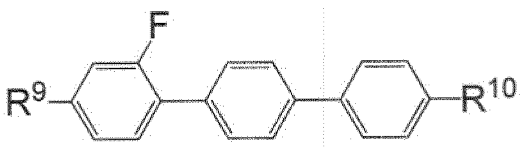

(3-8-1)

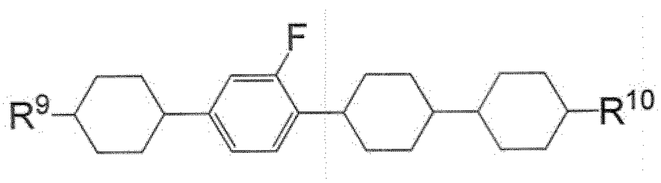

(3-9-1)

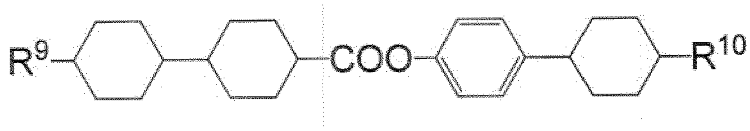

(3-10-1)

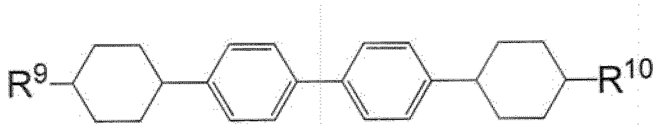

(3-11-1)

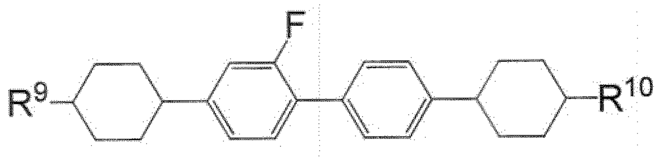

(3-12-1)

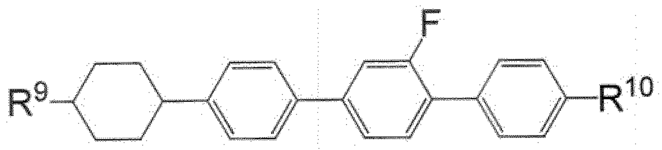

(3-13-1)

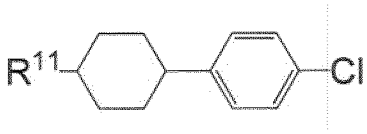

(4-1-1)

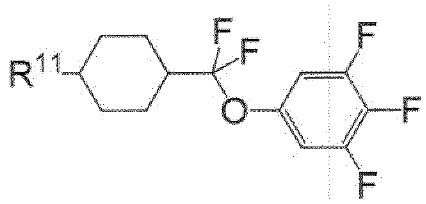

(4-2-1)

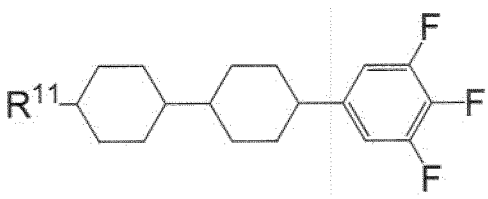

(4-3-1)

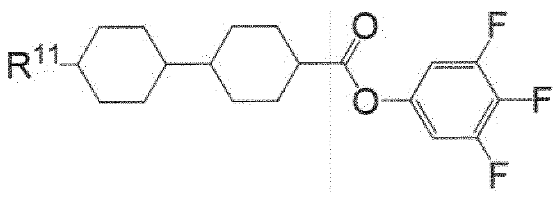

(4-4-1)

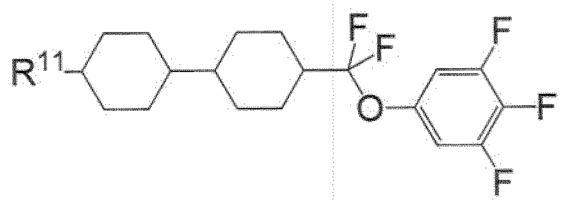

(4-5-1)

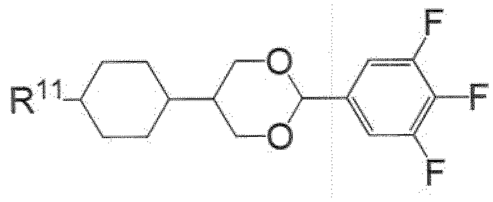

(4-6-1)

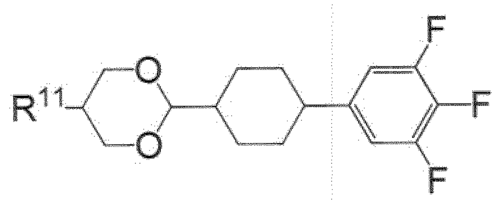

(4-7-1)

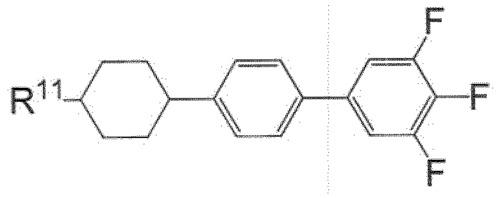

(4-8-1)

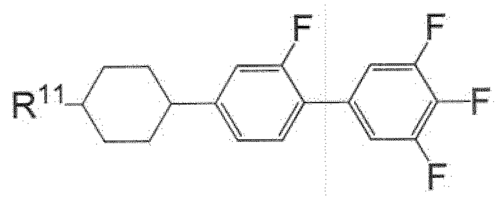

(4-9-1)

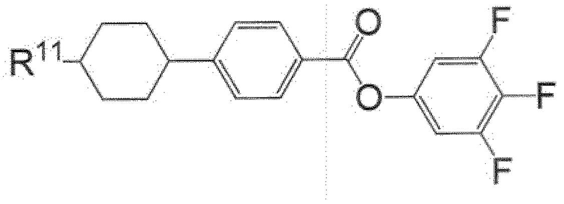

(4-10-1)

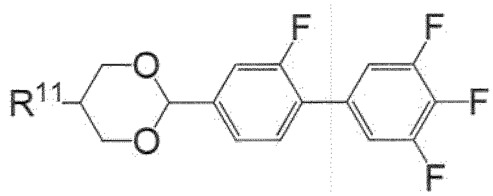

(4-11-1)

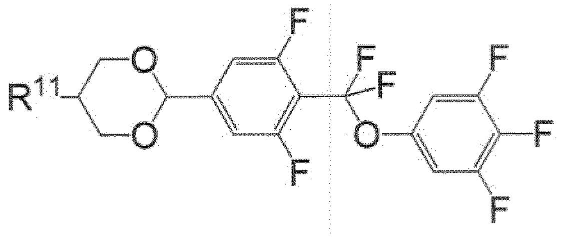

(4-12-1)

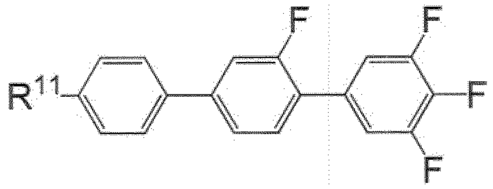

(4-13-1)

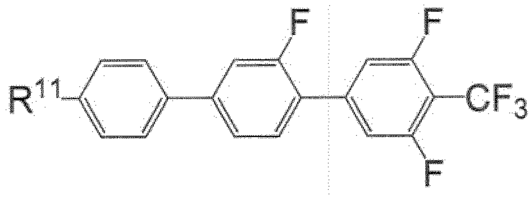

(4-14-1)

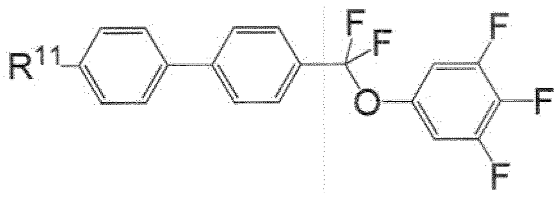

(4-15-1)

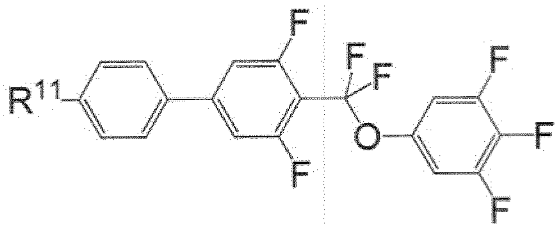

(4-16-1)

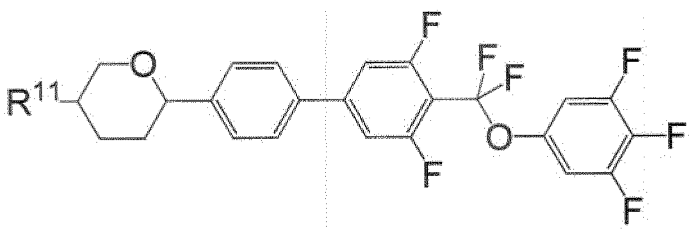

(4-17-1)

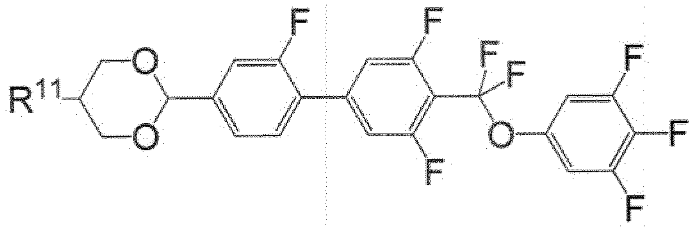

(4-18-1)

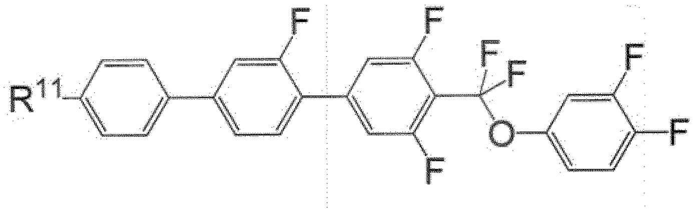

(4-19-1)

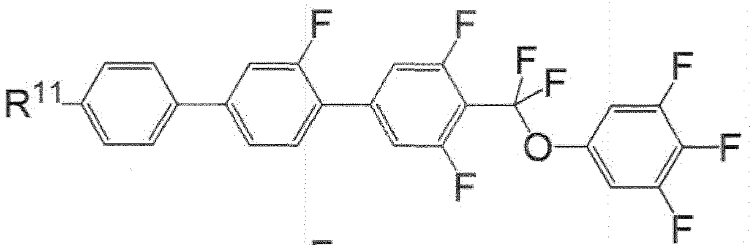

(4-20-1)

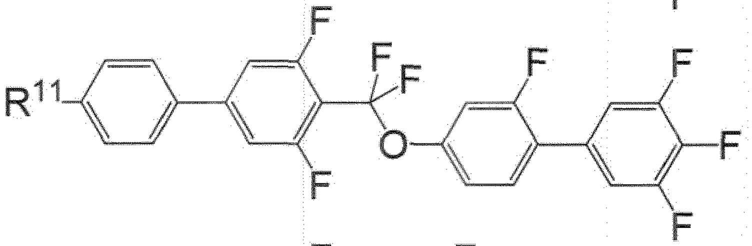

(4-21-1)

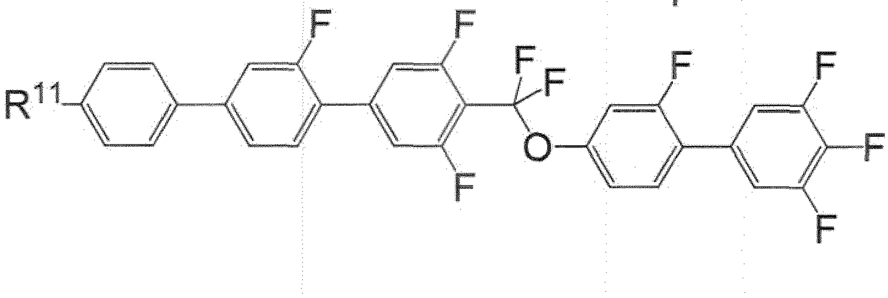

(4-22-1)

Sixth, the additive that may be mixed with the composition will be described. Such an additive includes the optically active compound, the antioxidant, the ultraviolet light absorber, the dye, the antifoaming agent, the polymerizable compound and the polymerization initiator. The optically active compound is mixed with the composition for the purpose of inducing a helical structure in liquid crystals to give a twist angle. Examples of such a compound include compound (5-1) to compound (5-5) . A preferred ratio of the optically active compound is 5% by weight or less. A further preferred ratio is in the range of 0.01% by weight to 2% by weight.

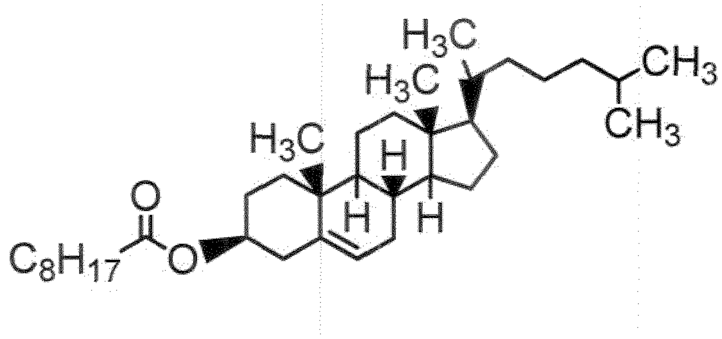

(5-1)

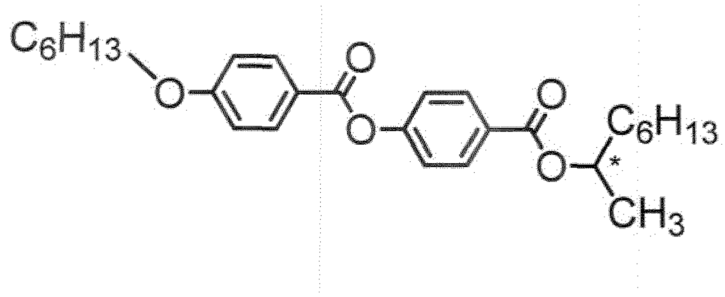

(5-2)

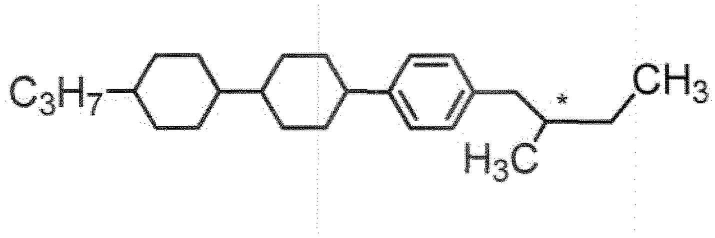

(5-3)

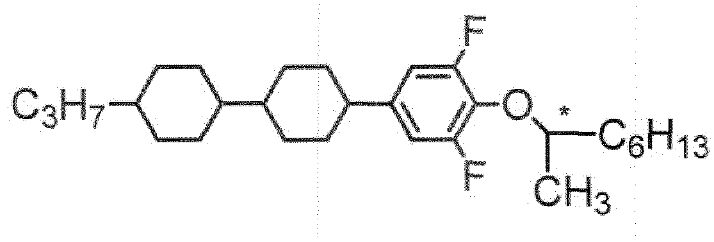

(5-4)

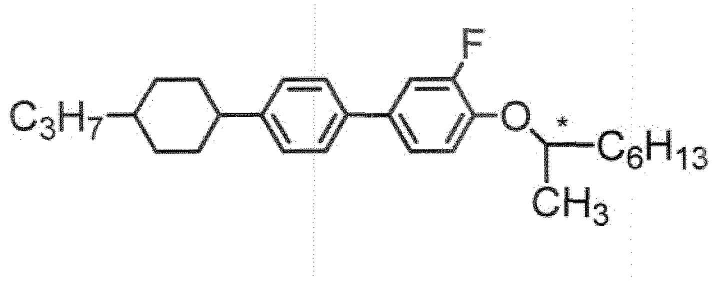

(5-5)

The antioxidant is mixed with the composition for the purpose of preventing a decrease in the specific resistance caused by heating in air, or maintaining a large voltage holding ratio at room temperature and also at a temperature close to the maximum temperature of the nematic phase even after the device has been used for a long period of time.

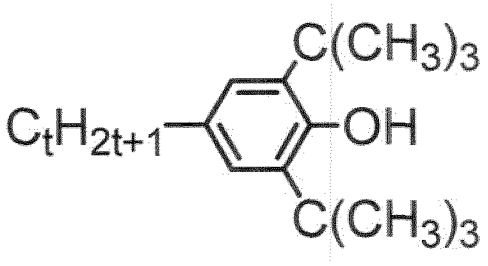

(6)

Preferred examples of the antioxidant include compound (6) where t is an integer from 1 to 9. In compound (6), preferred t is 1, 3, 5, 7 or 9. Further preferred t is 1 or 7. Compound (6) where t is 1 is effective in preventing a decrease in the specific resistance caused by heating in air because such compound (6) has a large volatility. Compound (6) where t is 7 is effective in maintaining a large voltage holding ratio at room temperature and also at a temperature close to the maximum temperature of the nematic phase even after the device has been used for a long period of time because such compound (6) has a small volatility. A preferred ratio of the antioxidant is about 50 ppm or more for achieving the effect thereof, and about 600 ppm or less for avoiding a decrease in the maximum temperature or avoiding an increase in the minimum temperature. A further preferred ratio is in the range of about 100 ppm to about 300 ppm.

Preferred examples of the ultraviolet light absorber include a benzophenone derivative, a benzoate derivative and a triazole derivative. A light stabilizer such as an amine having steric hindrance is also preferred. A preferred ratio of the ultraviolet light absorber or the stabilizer is about 50 ppm or more for achieving the effect thereof, and about 10,000 ppm or less for avoiding a decrease in the maximum temperature or avoiding an increase in the minimum temperature. A further preferred ratio is in the range of about 100 ppm to about 10,000 ppm.

A dichroic dye such as an azo dye or an anthraquinone dye is mixed with the composition to be adapted for a device having a guest host (GH) mode. A preferred ratio of the dye is in the range of about 0.01% by weight to about 10% by weight. The antifoaming agent such as dimethyl silicone oil or methyl phenyl silicone oil is mixed with the composition for preventing foam formation. A preferred ratio of the antifoaming agent is about 1 ppm or more for achieving the effect thereof, and about 1,000 ppm or less for avoiding a poor display. A further preferred ratio is in the range of about 1 ppm to about 500 ppm.

The polymerizable compound is mixed with the composition to be adopted for a device having the polymer sustained alignment (PSA) mode. Preferred examples of the polymerizable compound include a polymerizable group having a polymerizable group, such as an acrylate, a methacrylate, a vinyl compound, a vinyloxy compound, a propenyl ether, an epoxy compound (oxirane, oxetane) and a vinyl ketone. Particularly preferred examples include an acrylate derivative or a methacrylate derivative. A preferred ratio of the polymerizable compound is about 0.05% by weigh or more for achieving the effect thereof, and about 10 % by weight or less in order to prevent a poor display. A further preferred ratio is in the range of about 0.1% by weight to about 2% by weight. The polymerizable compound is preferably polymerized by irradiation with ultraviolet light or the like in the presence of a suitable initiator such as a photopolymerization initiator. Suitable conditions for polymerization, suitable types of the initiator and suitable amounts thereof are known to a person skilled in the art and are described in literature. For example, Irgacure 651 (registered trademark; BASF), Irgacure 184 (registered trademark; BASF) or Darocur 1173 (registered trademark; BASF), each being a photoinitiator, is suitable for radical polymerization. A preferred ratio of the photopolymerization initiator is in the range of about 0.1% by weight to about 5% by weight in the polymerizable compound, and a particularly preferred ratio is in the range of about 1% by weight to about 3% by weight.

Seventh, the methods for synthesizing the component compounds will be described. Such compound (1) to compound (4) can be prepared by a known method. Examples of the synthetic methods will be shown. Compound (1-2-1) is prepared by the method described in JP H10-081679 A. Compound (2-1-1) is prepared by the method described in JP H10-251186 A. Compound (3-1-1) is prepared by the method described in JP S59-70624 A. Compound (4-3-1) and compound (4-8-1) are prepared by the method described in JP H2-233626 A. The antioxidant is commercially available. A compound represented by formula (6) where t is 1 is available from Sigma-Aldrich Corporation. Compound (6) where t is 7 and so forth are prepared according to the method described in US 3660505 B.

Any compounds whose synthetic methods are not described above can be prepared according to the methods described in books such as Organic Syntheses (John Wiley & Sons, Inc.), Organic Reactions (John Wiley & Sons, Inc.), Comprehensive Organic Synthesis (Pergamon Press) and New Experimental Chemistry Course (Shin Jikken Kagaku Koza in Japanese) (Maruzen Co. , Ltd.). The composition is prepared according to a publicly known method using the thus obtained compounds . For example, the component compounds are mixed and dissolved in each other by heating.

Last, then application of the composition will be described. The composition according to the invention mainly has a minimum temperature of about -10°C or lower, a maximum temperature of about 80°C or higher, and an optical anisotropy in the range of about 0.07 to about 0.20. The device including the composition has a large voltage holding

ratio. The composition is suitable for use in the AM device. The composition is particularly suitable for use in a transmissive AM device. The composition having an optical anisotropy in the range of about 0.08 to about 0.25 and further the composition having an optical anisotropy in the range of about 0.10 to about 0.30 may be prepared by controlling the ratio of the component compounds or by mixing any other liquid crystal compound. The composition can be used as the composition having the nematic phase and as the optically active composition by adding the optically active compound.

The composition can be used for the AM device. The composition can also be used for a PM device. The composition can be used for an AM device and a PM device both having a mode such as PC, TN, STN, ECB, OCB, IPS, FFS, VA, PSA or FPA. Use for the AM device having the TN mode, the OCB mode, the IPS mode or the FFS mode is particularly preferred. In the AM device having the IPS mode or the FFS mode, alignment of liquid crystal molecules in no voltage application state may be parallel or vertical to a panel substrate. The devices may be of a reflective type, a transmissive type or a transflective type. Use for the transmissive device is preferred. The composition can also be used for an amorphous silicon-TFT device or a polycrystal silicon-TFT device. The composition can also be used for a nematic curvilinear aligned phase (NCAP) device prepared by microencapsulating the composition, or for a polymer dispersed (PD) device in which a three-dimensional network-polymer is formed in the composition.

## Examples

In order to evaluate characteristics of a composition and a compound to be contained in the composition, the composition and the compound were made a measurement object. When the measurement object was a composition, the measurement object was measured as was, and values obtained were described. When the measurement object was a compound, a sample for measurement was prepared by mixing the compound (15% by weight) with a base liquid crystal (85% by weight). Values of characteristics of the compound were calculated using values obtained by measurement, according to an extrapolation method: (extrapolated value) = {(measured value of a sample for measurement) - 0.85 $\times$ (measured value of a base liquid crystal)} / 0.15. When a smectic phase (or crystals) precipitated at the ratio thereof at 25°C, a ratio of the compound to the base liquid crystal was changed step by step in the order of (10% by weight : 90% by weight), (5% by weight : 95% by weight) and (1% by weight : 99% by weight). Values of maximum temperature, optical anisotropy, viscosity and dielectric anisotropy with regard to the compound were determined according to the extrapolation method.

A component of the base liquid crystal was described below. A ratio of the component was expressed in terms of weight percent (% by weight).

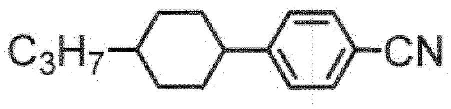 24%

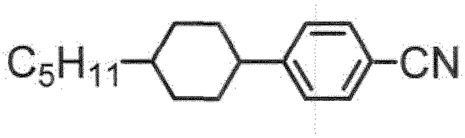 36%

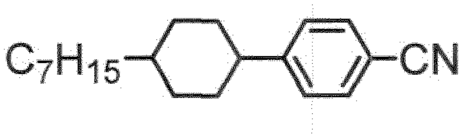 25%

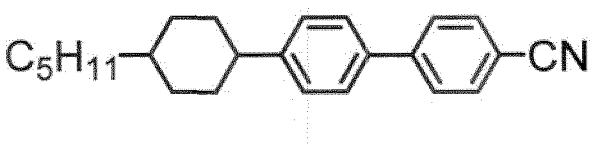 15%

Values of the characteristics were measured according to the methods described below. Most of the methods are applied as described in the Standard of Japan Electronics and Information Technology Industries Association (hereinafter, abbreviated as JEITA) discussed and established as the Standard of JEITA (JEITA ED-2521B), or as modified thereon.

Maximum temperature of a nematic phase (NI; °C): A sample was placed on a hot plate in a melting point apparatus equipped with a polarizing microscope and was heated at a rate of 1°C per minute. Temperature when part of the sample began to change from a nematic phase to an isotropic liquid was measured. A miaximum temperature of the nematic phase may be occasionally abbreviated as "maximum temperature."

Minimum temperature of a nematic phase (Tc; °C) : Samples each having a nematic phase were put in glass vials and kept in freezers at temperatures of 0°C, -10°C, -20°C, -30°C and -40°C for 10 days, and then liquid crystal phases were observed. For example, when the sample maintained the nematic phase at -20°C and changed to crystals or a smectic phase at -30°C, Tc was expressed as Tc < -20°C. A minimum temperature of the nematic phase may be occasionally abbreviated as "minimum temperature."

Viscosity (bulk viscosity; $\eta$; measured at 20°C; mPa·s): A cone-plate (E type) rotational viscometer was used for measurement.

Viscosity (rotational viscosity; $\gamma 1$; measured at 25°C; mPa·s) : Measurement was carried out according to a method described in M. Imai et al., Molecular Crystals and Liquid Crystals, Vol. 259, 37 (1995) . A sample was put in a TN device in which a twist angle was 0 degrees and a distance (cell gap) between two glass substrates was 5 micrometers. Voltage was applied stepwise to the device in the range of 16 V to 19.5 V at an increment of 0.5 V. After 0.2 second with no voltage application, voltage was applied repeatedly under conditions of only one rectangular wave (rectangular pulse; 0.2 second) and no application (2 seconds). A peak current and a peak time of a transient current generated by the applied voltage were measured. A value of rotational viscosity was obtained from the measured values according to calculating equation (8) described on page 40 of the paper presented by M. Imai et al. A value of dielectric anisotropy required for the calculation was determined using the device by which the rotational viscosity was measured and by a method described below.

Optical anisotropy (refractive index anisotropy; $\Delta n$; measured at 25°C): Measurement was carried out by an Abbe refractometer with a polarizing plate mounted on an ocular, using light at a wavelength of 589 nanometers. A surface of a main prism was rubbed in one direction, and then a sample was added dropwise onto the main prism. A refractive index ($n\|$) was measured when the direction of polarized light was parallel to the direction of rubbing. A refractive index ($n\perp$) was measured when the direction of polarized light was perpendicular to the direction of rubbing. A value of optical anisotropy was calculated from an equation: $\Delta n = n\| - n\perp$.

Dielectric anisotropy ($\Delta\varepsilon$; measured at 25°C): A sample was put in a TN device in which a distance (cell gap) between two glass substrates was 9 micrometers and a twist angle was 80 degrees. Sine waves (10 V, 1 kHz) were applied to the device, and after 2 seconds, a dielectric constant ($\varepsilon\|$) in the major axis direction of liquid crystal molecules was measured. Sine waves (0.5 V, 1 kHz) were applied to the device, and after 2 seconds, a dielectric constant ($e\perp$) in the minor axis direction of the liquid crystal molecules was measured. A value of dielectric anisotropy was calculated from an equation: $\Delta\varepsilon = \varepsilon\| - \varepsilon\perp$.

Threshold voltage (Vth; measured at 25°C; V): An LCD-5100 luminance meter made by Otsuka Electronics Co., Ltd. was used for measurement. A light source was a halogen lamp. A sample was put in a normally white mode TN device in which a distance (cell gap) between two glass substrates was about $0.45/\Delta n$ ($\mu$m) and a twist angle was 80 degrees. A voltage (32 Hz, rectangular waves) to be applied to the device was stepwise increased from 0 V to 10 V at an increment of 0.02 V. On the occasion, the device was irradiated with light from a direction perpendicular to the device, and an amount of light transmitted through the device was measured. A voltage-transmittance curve was prepared, in which a maximum amount of light corresponds to 100% transmittance and a minimum amount of light corresponds to 0% transmittance. A threshold voltage is expressed in terms of a voltage at 90% transmittance.

Voltage holding ratio (VHR-1; measured at 25°C; %) : A TN device used for measurement had a polyimide alignment film, and a distance (cell gap) between two glass substrates was 5 micrometers. A sample was put in the device, and then the device was sealed with an ultraviolet-curable adhesive. A pulse voltage (60 microseconds at 5 V) was applied to the device and the device was charged. A decaying voltage was measured for 16.7 milliseconds with a high-speed voltmeter, and area A between a voltage curve and a horizontal axis in a unit cycle was determined. Area B is an area without decay. A voltage holding ratio is in terms of a percentage of area A to area B.

Voltage holding ratio (VHR-2; measured at 80°C; %): A TN device used for measurement had a polyimide alignment film and a distance (cell gap) between two glass substrates was 5 micrometers. A sample was put in the device, and then the device was sealed with an ultraviolet-curable adhesive. A pulse voltage (60 microseconds at 5 V) was applied to the TN device and the device was charged. A decaying voltage was measured for 16.7 milliseconds with a high-speed voltmeter, and area A between a voltage curve and a horizontal axis in a unit cycle was determined. Area B is an area without decay. A voltage holding ratio is a percentage of area A to area B.

Voltage holding ratio (VHR-3; measured at 25°C; %) : Stability to ultraviolet light was evaluated by measuring a voltage holding ratio after a device was irradiated with ultraviolet light. A TN device used for measurement had a polyimide alignment film, and a cell gap was 5 micrometers. A sample was injected into the device, and then the device was irradiated with light for 20 minutes . A light source was an ultra high-pressure mercury lamp USH-500D (made by Ushio, Inc.), and a distance between the device and the light source was 20 centimeters. In measuring VHR-3, a decaying

voltage was measured for 16.7 milliseconds. A composition having a large VHR-3 has a large stability to ultraviolet light. A value of VHR-3 is preferably 90% or more, and further preferably, 95% or more.

Voltage holding ratio (VHR-4; measured at 25°C; %) : A TN device into which a sample was injected was heated in a constant- temperature bath at 80°C for 500 hours, and then stability to heat was evaluated by measuring a voltage holding ratio. In measuring VHR-4, a decaying voltage was measured for 16.7 milliseconds. A composition having a large VHR-4 has a large stability to heat.

Response time ($\tau$; measured at 25°C; ms) : An LCD-5100 luminance meter made by Otsuka Electronics Co. , Ltd. was used for measurement. A light source was a halogen lamp. A low-pass filter was set at 5 kHz. A sample was put in a normally white mode TN device in which a distance (cell gap) between two glass substrates was 5.0 micrometers and a twist angle was 80 degrees. Rectangular waves (60 Hz, 5 V, 0.5 second) were applied to the device. On the occasion, the device was irradiated with light from a direction perpendicular to the device, and an amount of light transmitted through the device was measured. The maximum amount of light corresponds to 100% transmittance, and the minimum amount of light corresponds to 0% transmittance. A rise time ($\tau r$: millisecond) was expressed in terms of a period of time required for a change from 90% transmittance to 10% transmittance. A fall time ($\tau f$: millisecond) was expressed in terms of a period of time required for a change from 10% transmittance to 90% transmittance. A response time was a sum of the rise time and the fall time thus obtained.

Elastic constant (K; measured at 25°C; pN) : HP4284A LCR Meter made by YOKOGAWA-Hewlett-Packard Co. was used for measurement. A sample was put in a horizontal alignment cell in which a distance (cell gap) between two glass substrates was 20 micrometers. An electric charge from 0 V to 20 V was applied to the cell, and electrostatic capacity and applied voltage were measured. Measured values of electrostatic capacity (C) and applied voltage (V) were fitted to equation (2.98) and equation (2.101) on page 75 of "Liquid Crystal Device Handbook (Ekisho Debaisu Handobukku, in Japanese)" (The Nikkan Kogyo Shimbun, Ltd.), and a value of K11 and K33 was obtained from equation (2.99). Next, K22 was calculated from equation (3.18) on page 171 described above using values of K11 and K33 thus obtained. An elastic constant was a mean value of K11, K22 and K33 thus obtained.

Specific resistance ($\rho$; measured at 25°C; $\Omega$cm) : Into a vessel equipped with electrodes, 1.0 milliliter of sample was injected. A DC voltage (10 V) was applied to the vessel, and a DC current after 10 seconds was measured. A specific resistance was calculated from the following equation: (specific resistance) = {(voltage) $\times$ (electric capacity of a vessel) } / { (direct current) $\times$ (dielectric constant of vacuum)}.

Helical pitch (P; measured at room temperature; $\mu$m) : A helical pitch was measured by a wedge method (Handbook of Liquid Crystals (Ekisho Binran in Japanese), page 196, (issued in 2000, Maruzen Co., Ltd.)). After a sample was injected into a wedge cell and left to stand at room temperature for 2 hours, a gap (d2 - d1) between disclination lines was observed by a polarizing microscope (trade name MM40/60 series, Nikon Corporation). A helical pitch (P) was calculated from the equation in which an angle of the wedge cell is expressed as $\theta$:

$$P = 2 \times (d2 - d1) \times \tan\theta .$$

Gas chromatographic analysis: GC-14B Gas Chromatograph made by Shimadzu Corporation was used for measurement. A carrier gas was helium (2 mL per minute). A sample injector and a detector (FID) were set to 280°C and 300°C, respectively. A capillary column DB-1 (length 30 m, bore 0.32 mm, film thickness 0.25 $\mu$m; dimethylpolysiloxane as a stationary phase, non-polar) made by Agilent Technologies, Inc. was used for separation of component compounds. After a column was kept at 200°C for 2 minutes, the column was heated to 280°C at a rate of 5°C per minute. A sample was prepared in an acetone solution (0.1% by weight), and then 1 microliter of the solution was injected into the sample injector. A recorder was C-R5A Chromatopac made by Shimadzu Corporation or the equivalent thereof. The resulting gas chromatogram showed a retention time of a peak and a peak area corresponding to each of the component compounds.

As a solvent for diluting the sample, chloroform, hexane or the like may also be used. The following capillary columns may also be used for separating the component compounds: HP-1 (length 30m, bore 0.32mm, film thickness 0.25 $\mu$m) made by Agilent Technologies, Inc., Rtx-1 (length 30 m, bore 0.32 mm, film thickness 0.25 $\mu$m) made by Restek Corporation and BP-1 (length 30 m, bore 0.32 mm, film thickness 0.25 $\mu$m) made by SGE International Pty. Ltd. A capillary column CBP1-M50-025 (length 50 m, bore 0.25 mm, film thickness 0.25 $\mu$m) made by Shimadzu Corporation may also be used for the purpose of avoiding an overlap of peaks of the compounds.

A ratio of liquid crystal compounds contained in the composition may be calculated by the method as described below. The liquid crystal compounds can be detected by a gas chromatograph. A ratio of the peak areas in the gas chromatogram corresponds to a ratio (in the number of moles) of the liquid crystal compounds. When the capillary column described above was used, a correction coefficient of each of the liquid crystal compounds may be regarded as 1 (one). Accordingly, a ratio (% by weight) of the liquid crystal compounds was calculated from the ratio of the peak areas.

The invention will be described in detail by way of Examples. The invention is not limited by the Examples described below. The compounds in Comparative Examples and Examples were described using symbols according to definitions in Table 3 below. In Table 3, a configuration of 1,4-cyclohexylene is trans. A parenthesized number next to a symbolized compound corresponds to the number of the compound. A symbol (-) means any other liquid crystal compound. A ratio (percentage) of the liquid crystal compounds is expressed in terms of weight percent (% by weight) based on the total weight of the liquid crystal composition, and the liquid crystal composition includes an impurity. Values of the characteristics of the composition were summarized in the last part.

Table 3 Method for Description of Compounds using Symbols R-$(A_1)$-$Z_1$-·····-$Z_n$-$(A_n)$-R'

| 1) Left-terminal Group R- | Symbol | 4) Ring Structure -$A_n$- | Symbol |
|---|---|---|---|
| $C_nH_{2n+1}$- | n- | 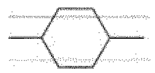 | H |
| $C_nH_{2n+1}O$- | nO- | | |
| $C_mH_{2m+1}OC_nH_{2n}$- | mOn- | | |
| $CH_2$=CH- | V- | 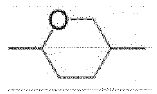 | Dh |
| $C_nH_{2n+1}$-CH=CH- | nV- | | |
| $CH_2$=CH-$C_nH_{2n}$- | Vn- | 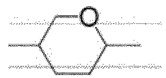 | dh |
| $C_mH_{2m+1}$-CH=CH-$C_nH_{2n}$- | mVn- | | |
| $CF_2$=CH- | VFF- | | |
| $CF_2$=CH-$C_nH_{2n}$- | VFFn- | 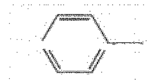 | B |
| 2) Right-terminal Group -R' | Symbol | | |
| -$C_nH_{2n+1}$ | -n | 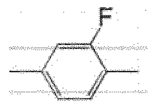 | B(F) |
| -$OC_nH_{2n+1}$ | -On | | |
| -CH=$CH_2$ | -V | 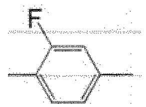 | B(2F) |
| -CH=CH-$C_nH_{2n+1}$ | -Vn | | |
| -$C_nH_{2n}$-CH=$CH_2$ | -nV | | |
| -CH=$CF_2$ | -VFF | 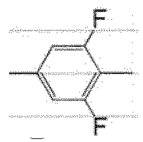 | B(F,F) |
| -$COOCH_3$ | -EMe | | |
| -F | -F | | |
| -Cl | -CL | 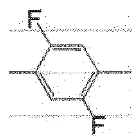 | B(2F,5F) |
| -$OCF_3$ | -OCF3 | | |
| -$CF_3$ | -CF3 | | |
| -CN | -C | | |

(continued)

| 1) Left-terminal Group R- | Symbol | 4) Ring Structure $-A_n-$ | Symbol |
|---|---|---|---|
| 3) Bonding Group $-Z_n-$ | Symbol | 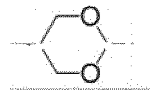 | G |
| $-C_7H_4-$ | 2 | | |
| -COO- | E | 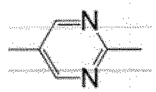 | Py |
| -CH=CH- | V | | |
| -C≡C- | T | | |
| $-CF_2O-$ | X | | |
| $-CH_2O-$ | 1O | | |
| 5) Examples of Description | | | |
| Example 1 3-HH-V1 | | Example 2 3-BB(F)B(F,F)-F | |
| 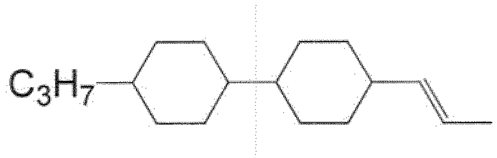 | | 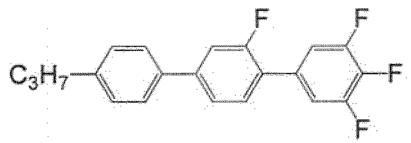 | |
| Example 3 4-HGB(F,F)XB(F,F)-F | | Example 4 5-GBB(F,F)B(F)-F | |
| 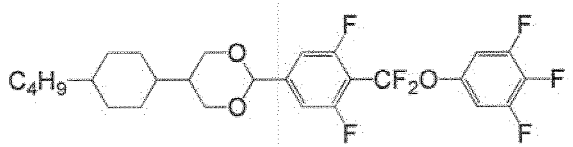 | | 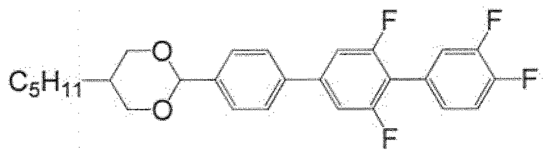 | |

**Comparative Example 1**

Example 2.5 was selected from compositions disclosed in WO 2011/082742 A. A reason is that the composition contains compound (1-2-1), compound (3-1-1), compound (3-5-1), compound (3-7-1), compound (4-17-1) and compound (4-20-1). Components and characteristics of the composition were as described below.

| | | |
|---|---|---|
| 3-B(F)B(F)XB(F,F)-F | (4) | 11% |
| 2-dhBB(F,F)XB(F,F)-F | (4-17-1) | 3% |
| 3-dhBB(F,F)XB(F,F)-F | (4-17-1) | 9% |
| 3-BB(F)B(F,F)XB(F,F)-F | (4-20-1) | 3% |
| 4-BB(F)B(F,F)XB(F,F)-F | (4-20-1) | 7% |
| 4-GBB(F)B(F,F)-F | (1-2-1) | 3% |
| 3-HH-V | (3-1-1) | 34% |
| V-HHB-1 | (3-5-1) | 11% |
| V2-HHB-1 | (3-5-1) | 11% |
| 2-BB(F)B-3 | (3-7-1) | 4% |
| 2-BB(F)B-4 | (3-7-1) | 4% |
| NI = 90.5°C; $\Delta n$ = 0.121; $\Delta\varepsilon$ = 10.6; Vth = 1.20 V; $\gamma 1$ = 91.0 mPa·s. | | |

**Comparative Example 2**

Example 18 was selected from compositions disclosed in JP 2011-514410 A. A reason is that the composition contains compound (1-2-1), compound (3-1-1), compound (3-5-1), compound (3-13-1), compound (4-13-1), compound (4-16-1) and compound (4-20-1). Components and characteristics of the composition were as described below.

| | | |
|---|---|---|
| 3-GBB(F)B(F,F)-F | (1-2-1) | 5% |
| 2-BB(F)B(F,F)-F | (4-13-1) | 4% |
| 3-BB(F)B(F,F)-F | (4-13-1) | 8% |
| 3-BBB(F)B(F,F)-F | (4) | 2% |
| 3-BB(F,F)XB(F,F)-F | (4-16-1) | 7% |
| 3-BB(F)B(F,F)XB(F,F)-F | (4-20-1) | 8% |
| 4-HH-V | (3-1-1) | 22% |
| 3-HH-V1 | (3-1-1) | 10% |
| V-HHB-1 | (3-5-1) | 18% |
| V2-HHB-1 | (3-5-1) | 2% |
| 4-HBB(F)B-3 | (3-13-1) | 6% |
| 3-HB-CL | (4-1-1) | 2% |
| 3-B(F)B(F)B-CL | (4) | 6% |
| NI = 99.5°C; $\Delta n$ = 0.140; $\Delta\varepsilon$ = 10.1; Vth = 1.30 V; $\gamma 1$ = 112.0 mPa·s. | | |

**Comparative Example 3**

Example 27 was selected from compositions disclosed in JP H10-081679 A. A reason is that the composition contains compound (1), compound (3-1) and compound (3-1-1). No description was made on rotational viscosity, and therefore the composition was prepared and measured by the methods described above. Components and characteristics

of the composition were as described below.

| | | |
|---|---|---|
| 3-GB(F)EB(F)-F | (4) | 5% |
| 3-GB(F,F)BB(F,F)-F | (1) | 5% |
| V2-HB-C | (-) | 12% |
| 1V2-HB-C | (-) | 12% |
| 3-HB-C | (-) | 18% |
| 3-HB(F)-C | (-) | 5% |
| 2-BTB-1 | (-) | 2% |
| 3-HH-4 | (3-1-1) | 4% |
| 3-HH-VFF | (3-1) | 6% |
| 2-HHB-C | (-) | 3% |
| 3-HHB-C | (-) | 6% |
| 3-HB(F)TB-2 | (-) | 8% |
| 3-H2BTB-2 | (-) | 5% |
| 3-H2BTB-3 | (-) | 5% |
| 3-H2BTB-4 | (-) | 4% |
| NI = 93.5°C; $\Delta n$ = 0.161; $\Delta\varepsilon$ = 10.3; Vth = 1.83 V; $\eta$ = 23.8 mPa·s; $\gamma 1$ = 120.4 mPa·s. | | |

**Example 1**

| | | |
|---|---|---|
| 4-GBB(F)B(F,F)-F | (1-2-1) | 4% |
| 4-GB(F)B(F)B(F,F)-F | (1-3-1) | 2% |
| 5-GB(F)B(F)B(F,F)-F | (1-3-1) | 3% |
| 5-GBB(F,F)B(F)-CF3 | (1-7-1) | 3% |
| 3-HBB(F,F)XB(F,F)-F | (2-2-1) | 8% |
| 5-HBB(F,F)XB(F,F)-F | (2-2-1) | 7% |
| 2-HH-3 | (3-1-1) | 5% |
| 3-HH-V | (3-1-1) | 38% |
| 7-HB-1 | (3-2-1) | 3% |
| V-HHB-1 | (3-5-1) | 7% |
| 3-HHB(F,F)-F | (4-3-1) | 3% |
| 3-BBXB(F,F)-F | (4-15-1) | 5% |
| 3-BB(F)B(F,F)XB(F,F)-F | (4-20-1) | 3% |
| 4-BB(F)B(F,F)XB(F,F)-F | (4-20-1) | 9% |
| NI = 83.0°C; $\Delta n$ = 0.108; $\Delta\varepsilon$ = 10.1; Vth = 2.03 V; $\eta$ = 12.7 mPa·s; $\gamma 1$ = 80.4 mPa·s. | | |

**Example 2**

| | | |
|---|---|---|
| 3-GBB(F)B(F,F)-F | (1-2-1) | 2% |
| 4-GBB(F)B(F,F) -F | (1-2-1) | 3% |
| 3-HBBXB(F,F)-F | (2-1-1) | 7% |
| 3-HH-V | (3-1-1) | 36% |
| 3-HH-V1 | (3-1-1) | 10% |
| V2-HHB-1 | (3-5-1) | 8% |
| 3-HBB(F,F)-F | (4-8-1) | 4% |
| 3-GB(F,F)XB(F,F)-F | (4-12-1) | 5% |
| 3-BB(F)B(F,F)-CF3 | (4-14-1) | 3% |
| 4-GB(F)B(F,F)XB(F,F)-F | (4-18-1) | 5% |
| 5-GB(F)B(F,F)XB(F,F)-F | (4-18-1) | 4% |
| 3-BB(F)B(F,F)XB(F,F)-F | (4-20-1) | 3% |
| 4-BB(F)B(F,F)XB(F,F)-F | (4-20-1) | 10% |
| NI = 83.8°C; Δn = 0.107; Δε = 11.2; Vth = 1.86 V; η = 12.2 mPa·s; γ1 = 73.4 mPa·s | | |

**Example 3**

| | | |
|---|---|---|
| 4-GBB(F,F)B(F)-F | (1-1-1) | 3% |
| 5-GBB(F,F)B(F)-F | (1-1-1) | 3% |
| 3-HB(F)B(F,F)XB(F,F)-F | (2-3-1) | 7% |
| 3-HH-V | (3-1-1) | 37% |
| 1V2-HH-3 | (3-1-1) | 4% |
| 1-BB(F)B-2V | (3-7-1) | 5% |
| 2-BB(F)B-2V | (3-7-1) | 4% |
| 3-HB-CL | (4-1-1) | 4% |
| 3-HHXB(F,F)-F | (4-5-1) | 4% |
| 3-HB(F)B(F,F)-F | (4-9-1) | 4% |
| 3-dhBB(F,F)XB(F,F)-F | (4-17-1) | 7% |
| 3-BB(F)B(F,F)XB(F)-F | (4-19-1) | 5% |
| 4-BB(F)B(F,F)XB(F)-F | (4-19-1) | 3% |
| 3-BB(F,F)XB(F)B(F,F)-F | (4-21-1) | 7% |
| 5-BB(F)B(F,F)XB(F)B(F,F)-F | (4-22-1) | 3% |
| NI = 80.6C; Δn = 0.124; Δε = 11.4; Vth = 1.73 V; η = 12.7 mPa·s; γ1 = 80.7 mPa·s. | | |

**Example 4**

| | | |
|---|---|---|
| 4-GBB(F)B(F,F)-F | (1-2-1) | 3% |
| 3-GBB(F,F)B(F)-OCF3 | (1-4-1) | 3% |

(continued)

| | | |
|---|---|---|
| 5-GBB(F,F)B(F,F)-OCF3 | (1-5-1) | 2% |
| 5-GB(F)B(F,F)B(F,F)-OCF3 | (1-6-1) | 2% |
| 3-HBB(F,F)XB(F,F)-F | (2-2-1) | 5% |
| 3-HH-VFF | (3-1) | 4% |
| 3-HH-V | (3-1-1) | 38% |
| 4-HH-V1 | (3-1-1) | 3% |
| 1-BB-3 | (3-3-1) | 3% |
| 1V-HBB-2 | (3-6-1) | 4% |
| 2-BB(F)B-3 | (3-7-1) | 3% |
| 5-HBB(F)B-3 | (3-13-1) | 3% |
| 5-HXB(F,F)-F | (4-2-1) | 3% |
| 3-GB(F)B(F,F)-F | (4-11-1) | 6% |
| 4-GB(F)B(F,F)XB(F,F)-F | (4-18-1) | 3% |
| 5-GB(F)B(F,F)XB(F,F)-F | (4-18-1) | 3% |
| 4-BB(F)B(F,F)XB(F,F)-F | (4-20-1) | 8% |
| 5-BB(F)B(F,F)XB(F,F)-F | (4-20-1) | 4% |
| NI = 80.5°C; $\Delta n$ = 0.116; $\Delta\varepsilon$ = 10.0; Vth = 1.98 V; $\eta$ = 13.4 mPa·s; $\gamma 1$ = 82.2 mPa·s. | | |

**Example 5**

| | | |
|---|---|---|
| 4-GBB(F)B(F,F)-F | (1-2-1) | 3% |
| 4-GBB(F)B(F,F)-CF3 | (1-8-1) | 2% |
| 5-GBB(F)B(F,F)-CF3 | (1-8-1) | 2% |
| 5-GB(F)B(F)B(F,F)-CF3 | (1-9-1) | 2% |
| 3-HBBXB(F,F)-F | (2-1-1) | 5% |
| 3-HH-V | (3-1-1) | 38% |
| 1V2-HH-3 | (3-1-1) | 5% |
| 3-HH-O1 | (3-1) | 3% |
| V-HHB-1 | (3-5-1) | 3% |
| 3-HBB-2 | (3-6-1) | 4% |
| 1-BB(F)B-2V | (3-7-1) | 5% |
| 3-HBEB(F,F)-F | (4-10-1) | 3% |
| 3-BB(F,F)XB(F,F)-F | (4-16-1) | 8% |
| 4-GB(F)B(F,F)XB(F,F)-F | (4-18-1) | 4% |
| 5-GB(F)B(F,F)XB(F,F)-F | (4-18-1) | 3% |
| 3-BB(F)B(F,F)XB(F,F)-F | (4-20-1) | 3% |
| 4-BB(F)B(F,F)XB(F,F)-F | (4-20-1) | 7% |
| NI = 83.8°C; $\Delta n$ = 0.115; $\Delta\varepsilon$ = 10.2; Vth = 1.96 V; $\eta$ = 12.6 mPa·s; $\gamma 1$ = 80.3 mPa·s. | | |

**Example 6**

| | | |
|---|---|---|
| 4-GBB(F)B(F,F)-F | (1-2-1) | 3% |
| 5-GBB(F)B(F,F)-F | (1-2-1) | 3% |
| 4-GBB(F,F)B(F)-OCF3 | (1-4-1) | 3% |
| 5-GBB(F,F)B(F)-OCF3 | (1-4-1) | 3% |
| 3-HBBXB(F,F)-F | (2-1-1) | 9% |
| 3-HH-V | (3-1-1) | 38% |
| 1V2-HH-3 | (3-1-1) | 5% |
| 3-HB-O2 | (3-2-1) | 3% |
| 1-BB(F)B-2V | (3-7-1) | 4% |
| 5-B(F)BB-2 | (3-8-1) | 3% |
| 3-HHXB(F,F)-F | (4-5-1) | 5% |
| 3-BB(F)B(F,F)-F | (4-13-1) | 5% |
| 4-BB(F)B(F,F)XB(F,F)-F | (4-20-1) | 8% |
| 3-BB(F,F)XB(F)B(F,F)-F | (4-21-1) | 8% |
| NI = 87.2°C; $\Delta n$ = 0.125; $\Delta\varepsilon$ = 10.0; Vth = 2.04 V; $\eta$ = 13.4 mPa·s; $\gamma 1$ = 83.1 mPa·s. | | |

**Example 7**

| | | |
|---|---|---|
| 3-GBB(F)B(F,F)-F | (1-2-1) | 2% |
| 4-GBB(F)B(F,F)-F | (1-2-1) | 2% |
| 5-GBB(F)B(F,F)-F | (1-2-1) | 2% |
| 3-HBBXB(F,F)-F | (2-1-1) | 5% |
| 3-HB(F)B(F,F)XB(F,F)-F | (2-3-1) | 5% |
| 3-HH-V | (3-1-1) | 36% |
| 3-HH-V1 | (3-1-1) | 8% |
| 4-HHEH-3 | (3-4-1) | 3% |
| VFF-HHB-1 | (3-5) | 5% |
| V2-BB(F)B-1 | (3-7-1) | 5% |
| 3-GB(F)B(F,F)-F | (4-11-1) | 5% |
| 3-BB (F)B(F, F) -CF3 | (4-14-1) | 4% |
| 3-BB(F,F)XB(F,F)-F | (4-16-1) | 5% |
| 4-GB(F)B(F,F)XB(F,F)-F | (4-18-1) | 6% |
| 5-GB(F)B(F,F)XB(F,F)-F | (4-18-1) | 4% |
| 3-HHBB(F,F)-F | (-) | 3% |
| NI = 85.8°C; $\Delta n$ = 0.109; $\Delta\varepsilon$ = 10.4; Vth = 1.95 V; $\eta$ = 13.5 mPa·s; $\gamma 1$ = 83.0 mPa·s. | | |

**Example 8**

| | | |
|---|---|---|
| 4-GBB(F)B(F,F)-F | (1-2-1) | 3% |
| 5-GBB(F)B(F,F)-F | (1-2-1) | 3% |
| 4-GBB(F)B(F,F)-CF3 | (1-8-1) | 2% |
| 5-GBB(F)B(F,F)-CF3 | (1-8-1) | 2% |
| 3-HBBXB(F,F)-F | (2-1-1) | 6% |
| 5-HBBXB(F,F)-F | (2-1-1) | 4% |
| 3-HH-V | (3-1-1) | 40% |
| V2-BB-1 | (3-3-1) | 6% |
| 3-HHB-O1 | (3-5-1) | 3% |
| 3-HHB-1 | (3-5-1) | 5% |
| 5-HBBH-3 | (3-11-1) | 3% |
| 3-GB(F,F)XB(F,F)-F | (4-12-1) | 9% |
| 3-BB(F)B(F,F)-CF3 | (4-14-1) | 4% |
| 4-GB(F)B(F,F)XB(F,F)-F | (4-18-1) | 5% |
| 5-GB(F)B(F,F)XB(F,F)-F | (4-18-1) | 5% |
| NI = 85.3°C; Δn = 0.106; Δε = 10.5; Vth = 1.96 V; η = 12.7 mPa·s; γ1 = 80.8 mPa·s. | | |

**Example 9**

| | | |
|---|---|---|
| 4-GBB(F,F)B(F)-F | (1-1-1) | 3% |
| 5-GBB(F,F)B(F)-F | (1-1-1) | 3% |
| 4-GBB(F)B(F,F)-F | (1-2-1) | 2% |
| 5-GBB(F)B(F,F)-F | (1-2-1) | 2% |
| 5-GB(F)B(F)B(F,F)-F | (1-3-1) | 2% |
| 3-HBB(F,F)XB(F,F)-F | (2-2-1) | 8% |
| 3-HH-V | (3-1-1) | 37% |
| 1V2-BB-1 | (3-3-1) | 6% |
| 1-BB(F)B-2V | (3-7-1) | 5% |
| 3-HB(F)HH-2 | (3-9-1) | 3% |
| 5-HB(F)BH-3 | (3-12-1) | 3% |
| 3-HGB(F,F)-F | (4-6-1) | 4% |
| 5-GHB(F,F)-F | (4-7-1) | 4% |
| 3-BBXB(F,F)-F | (4-15-1) | 8% |
| 3-BB(F,F)XB(F,F)-F | (4-16-1) | 5% |
| 3-BB(F,F)XB(F)B(F,F)-F | (4-21-1) | 5% |
| NI = 80.0°C; Δn = 0.119; Δε = 10.2; Vth = 2.02 V; η = 13.2 mPa·s; γ1 = 81.5 mPa·s. | | |

**Example 10**

| | | |
|---|---|---|
| 5-GB(F)B(F)B(F,F)-F | (1-3-1) | 2% |
| 5-GBB(F)B(F,F)-CF3 | (1-8-1) | 2% |
| 5-GB(F)B(F)B(F,F)-CF3 | (1-9-1) | 2% |
| 3-HB(F)B(F,F)XB(F,F)-F | (2-3-1) | 7% |
| 3-HH-V | (3-1-1) | 37% |
| 3-HH-V1 | (3-1-1) | 6% |
| 1V2-HH-3 | (3-1-1) | 4% |
| 1-BB(F)B-2V | (3-7-1) | 5% |
| 2-BB(F)B-2V | (3-7-1) | 4% |
| 3-HHEBH-3 | (3-10-1) | 3% |
| 3-BBXB(F,F)-F | (4-15-1) | 4% |
| 3-dhBB(F,F)XB(F,F)-F | (4-17-1) | 9% |
| 3-GB(F)B(F,F)XB(F,F)-F | (4-18-1) | 3% |
| 4-GB(F)B(F,F)XB(F,F)-F | (4-18-1) | 5% |
| 3-BB(F,F)XB(F)B(F,F)-F | (4-21-1) | 7% |
| NI = 87.4°C; $\Delta n$ = 0.117; $\Delta\varepsilon$ = 11.6; Vth = 1.83 V; $\eta$ = 12.5 mPa·s; $\gamma 1$ = 81.0 mPa·s. | | |

Values of rotational viscosity ($\gamma 1$) of the compositions in Comparative Example 1 to Comparative Example 3 were 91.0 mPa·s to 120.4 mPa·s. On the other hand, values of rotational viscosity in Example 1 to Example 10 were 73.4 mPa·s to 83.0 mPa·s. Thus, the compositions in Examples had smaller rotational viscosity in comparison with the compositions in Comparative Examples. Accordingly, the liquid crystal composition according to the invention is concluded to have further excellent characteristics.

**Industrial Applicability**

A liquid crystal composition of the invention satisfies at least one of characteristics such as a high maximum temperature, a low minimum temperature, a small viscosity, a suitable optical anisotropy, a large dielectric anisotropy, a large specific resistance, a high stability to ultraviolet light, a high stability to heat and a large elastic constant, or has a suitable balance regarding at least two of the characteristics. A liquid crystal display device including such a composition that has a short response time, a large voltage holding ratio, a low threshold voltage, a large contrast ratio and a long service life and so forth, and thus can be used for a liquid crystal projector, a liquid crystal television and so forth.

**Claims**

**1.** A liquid crystal composition that has a nematic phase and contains at least one compound selected from the group of compounds represented by formula (1) as a first component and at least one compound selected from the group of compounds represented by formula (2) as a second component:

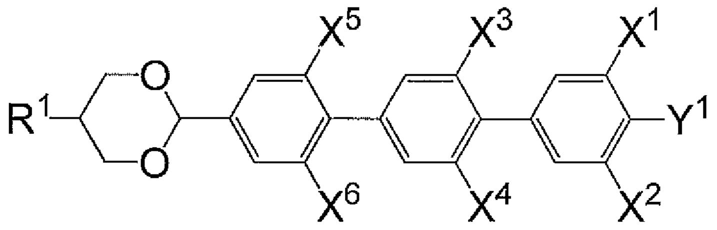

(1)

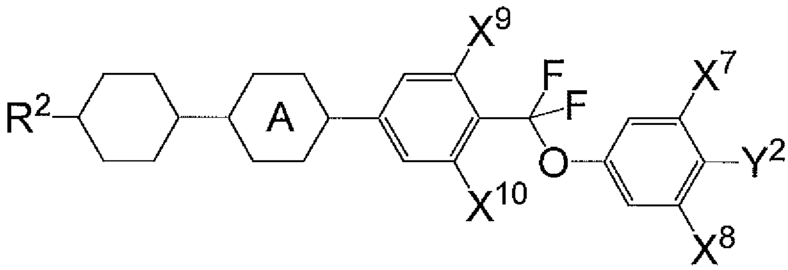

(2)

wherein, $R^1$ and $R^2$ are independently alkyl having 1 to 12 carbons, alkoxy having 1 to 12 carbons or alkenyl having 2 to 12 carbons; ring A is 1,4-phenylene, 2-fluoro-1,4-phenylene or 2,6-difluoro-1,4-phenylene; $X^1$, $X^2$, $X^3$, $X^4$, $X^5$, $X^6$, $X^7$, $X^8$, $X^9$ and $X^{10}$ are independently hydrogen or fluorine; and $Y^1$ and $Y^2$ are independently fluorine, chlorine, trifluoromethyl or trifluoromethoxy;
with the proviso that the following compositions are excluded:

| | |
|---|---|
| 3-GB(F)B(F)B(F,F)-F | 3% |
| 4-GB(F)B(F,F)XB(F,F)-F | 8% |
| 2-GB(F,F)XB(F)B(F,F)-F | 10% |
| 3-GB(F,F)XB(F)B(F,F)-F | 8% |
| 4-GB(F,F)XB(F)B(F,F)-F | 8% |
| 5-GBB(F)B(F,F)XB(F,F)-F | 3% |
| 6-GB(F)B(F,F)XB(F)B(F,F)-F | 5% |
| 5-HB-CL | 3% |
| 2-HHB-CL | 3% |
| 3-HHB(F,F)-F | 3% |
| 5-HHEB(F,F)-F | 2% |
| 2-HBEB(F,F)-F | 3% |
| 3-HBB(F,F)-F | 5% |
| 3-BB(F)B(F,F)-F | 10% |
| 2-BB(F,F)XB(F,F)-F | 5% |
| 2-HHBB(F,F)-F | 5% |
| 3-HBBXB(F,F)-F | 5% |
| 4-BB(F)B(F,F)XB(F,F)-F | 3% |
| 4-BB(F)B(F,F)XB(F,F)-CF3 | 5% |
| 5-B(F)B(F,F)B(F,F)XB(F,F)-CF3 | 3% |

| | |
|---|---|
| 5-GB(F)B(F)B(F,F)-F | 5% |
| 5-GB(F)B(F,F)XB(F,F)-F | 5% |
| 2-GB(F,F)XB(F)B(F,F)-F | 10% |
| 3-GB(F,F)XB(F)B(F,F)-F | 5% |
| 4-GB(F,F)XB(F)B(F,F)-F | 10% |
| 5-GB(F,F)XB(F)B(F,F)-F | 5% |
| 3-HHB-CL | 5% |
| 3-HHXB(F,F)-F | 7% |
| 5-HBB-F | 3% |
| 3-HBB(F,F)-F | 5% |
| 3-HHBB(F,F)-F | 4% |
| 4-HHBB(F,F)-F | 5% |
| 4-HBBXB(F,F)-F | 5% |
| 4-B(F)B(F,CL)B(F,F)XB(F,F)-F | 7% |
| 5-B(F)B(F,CL)B(F,F)XB(F,F)-F | 8% |
| 6-B(F)B(F,CL)B(F,F)XB(F,F)-CF3 | 8% |
| 6-B(F,CL)B(F,F)XB(F)B(F,F)-F | 3% |

**2.** The liquid crystal composition according to claim 1, containing at least one compound selected from the group of compounds represented by formula (1-1) to formula (1-9) as the first component:

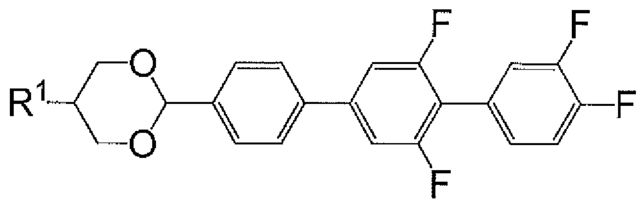

(1-1)

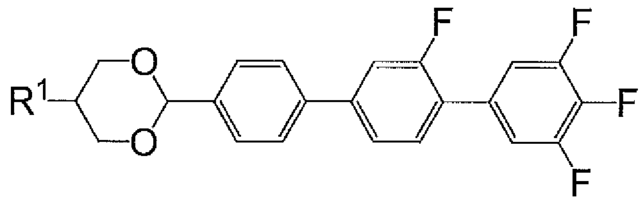

(1-2)

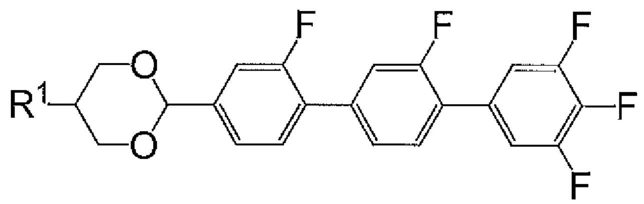

(1-3)

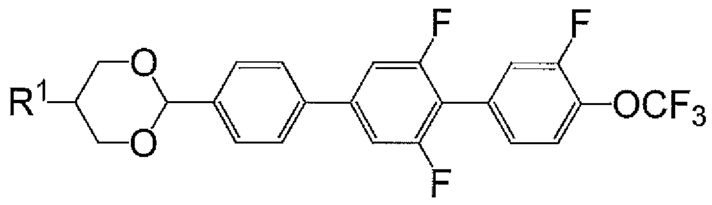

(1-4)

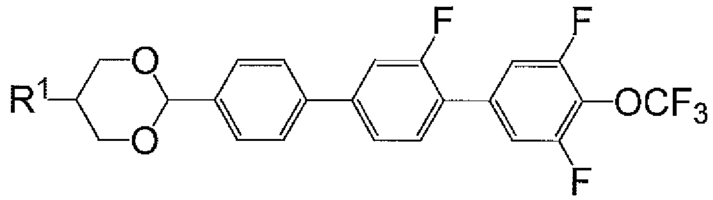

(1-5)

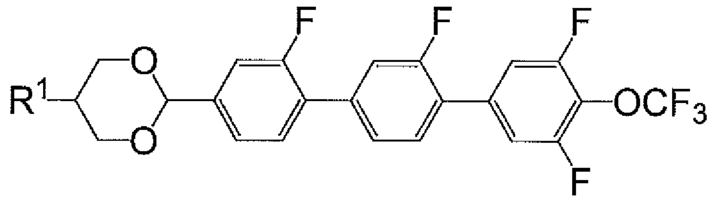

(1-6)

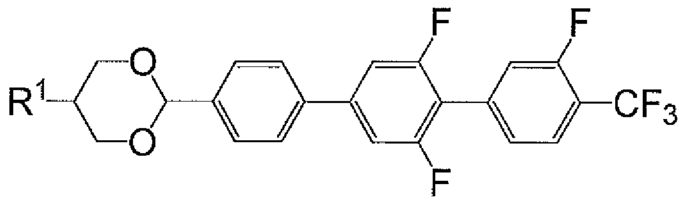

(1-7)

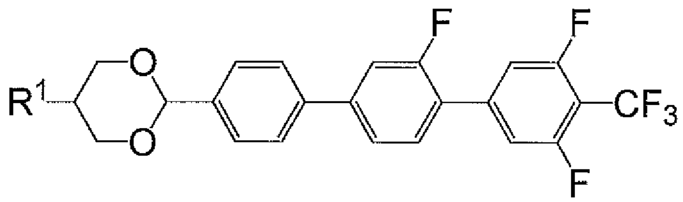

(1-8)

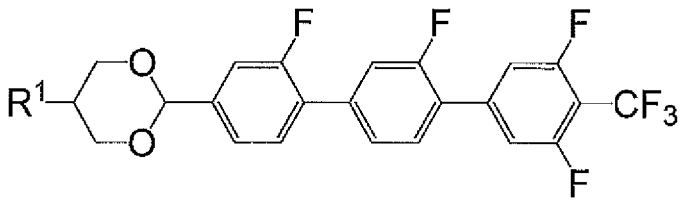

(1-9)

wherein, $R^1$ is alkyl having 1 to 12 carbons, alkoxy having 1 to 12 carbons or alkenyl having 2 to 12 carbons.

3. The liquid crystal composition according to claim 1 or 2, wherein the first component is at least one compound selected from the group of the compounds represented by formula (1-2) according to claim 2.

4. The liquid crystal composition according to any one of claims 1 to 3, containing at least one compound selected from the group of compounds represented by formula (2-1) to formula (2-3) as the second component:

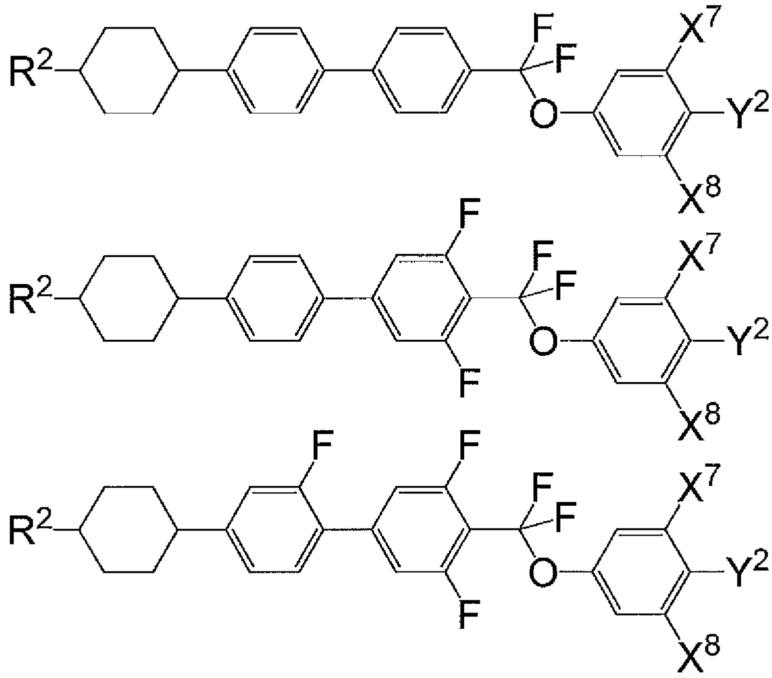

(2-1)

(2-2)

(2-3)

wherein, $R^2$ is alkyl having 1 to 12 carbons, alkoxy having 1 to 12 carbons or alkenyl having 2 to 12 carbons; $X^7$ and $X^8$ are independently hydrogen or fluorine; and $Y^2$ is fluorine, chlorine, trifluoromethyl or trifluoromethoxy.

5. The liquid crystal composition according to any one of claims 1 to 4, wherein a ratio of the first component is in the range of 5% by weight to 30% by weight, and a ratio of the second component is in the range of 5% by weight to 30% by weight, based on the total weight of the liquid crystal composition.

6. The liquid crystal composition according to any one of claims 1 to 5, containing at least one compound selected from the group of compounds represented by formula (3) as a third component:

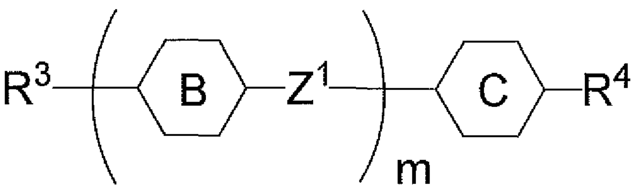

(3)

wherein, $R^3$ and $R^4$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine; ring B and ring C are independently 1,4-cyclohexylene, 1,4-phenylene, 2-fluoro-1,4-phenylene or 2,5-difluoro-1,4-phenylene; $Z^1$ is a single bond, ethylene or carbonyloxy; and m is 1, 2 or 3.

7. The liquid crystal composition according to any one of claims 1 to 6, containing at least one compound selected from the group of compounds represented by formula (3-1) to formula (3-13) as the third component:

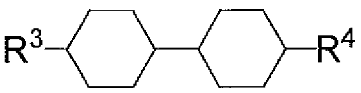

(3-1)

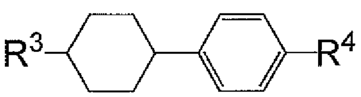

(3-2)

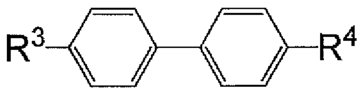

(3-3)

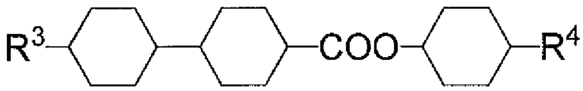

(3-4)

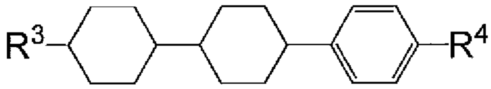

(3-5)

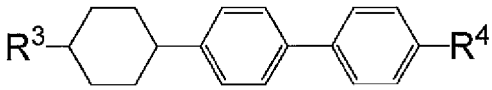

(3-6)

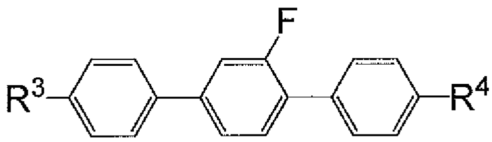

(3-7)

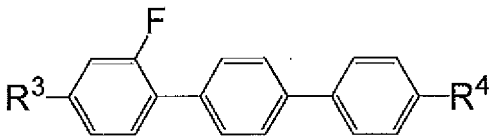

(3-8)

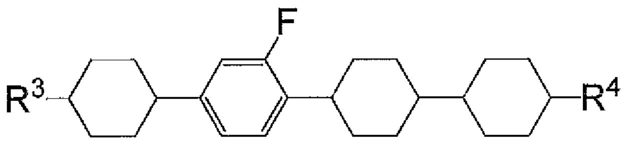

(3-9)

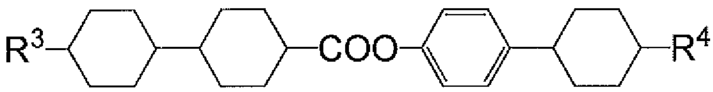

(3-10)

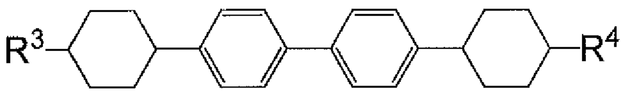

(3-11)

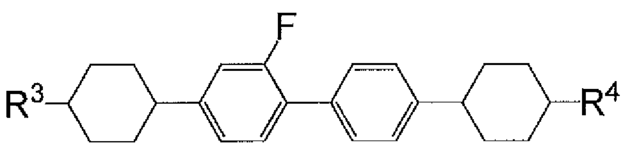

(3-12)

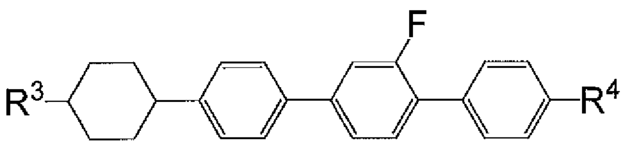

(3-13)

wherein, $R^3$ and $R^4$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine.

**8.** The liquid crystal composition according to claim 6 or 7, wherein a ratio of the third component is in the range of

30% by weight to 80% by weight based on the total weight of the liquid crystal composition.

**9.** The liquid crystal composition according to any one of claims 1 to 8, containing at least one compound selected from the group of compounds represented by formula (4) as a fourth component:

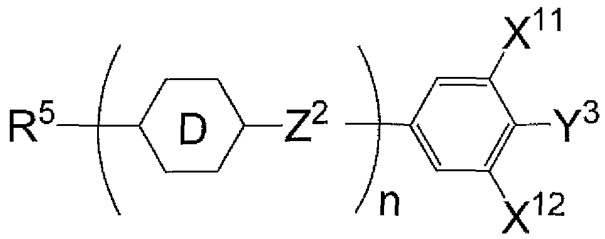

(4)

wherein, $R^5$ is alkyl having 1 to 12 carbons, alkoxy having 1 to 12 carbons or alkenyl having 2 to 12 carbons; ring D is 1, 4-phenylene, 2-fluoro-1,4-phenylene, 2,6-difluoro-1,4-phenylene, tetrahydropyran-2,5-diyl or pyrimidine-2,5-diyl; $Z^2$ is a single bond, ethylene, carbonyloxy or difluoromethyleneoxy; $X^{11}$ and $X^{12}$ are independently hydrogen or fluorine; $Y^3$ is fluorine, chlorine, trifluoromethyl or trifluoromethoxy; and n is 1, 2, 3 or 4, ring D when n is 1 or 2 may be 1,4-cyclohexylene or 1,3-dioxane-2,5-diyl, and ring D when n is 3 or 4 and at least one of $Z^2$ is not a single bond may be 1,3-dioxane-2,5-diyl.

**10.** The liquid crystal composition according to any one of claims 1 to9, wherein the fourth component is at least one compound selected from the group of compounds represented by formula (4-1) to formula (4-22):

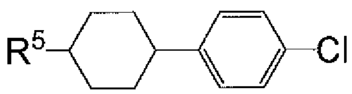

(4-1)

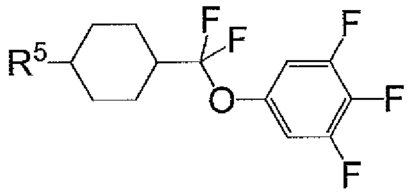

(4-2)

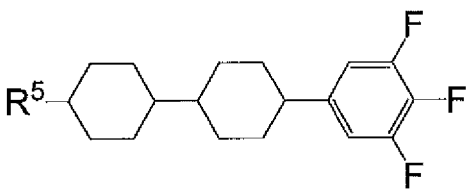

(4-3)

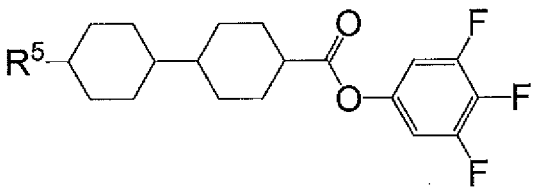

(4-4)

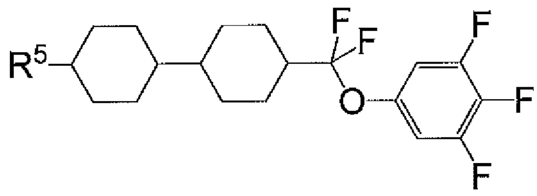

(4-5)

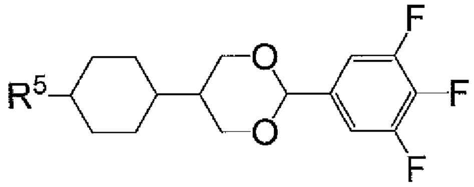

(4-6)

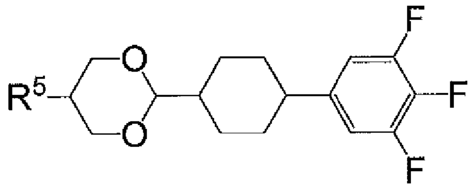

(4-7)

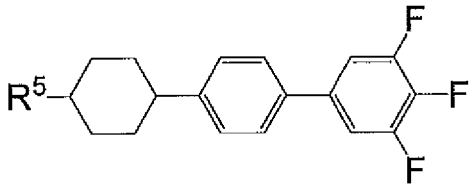

(4-8)

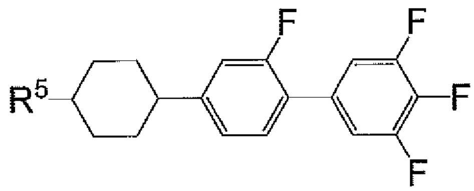

(4-9)

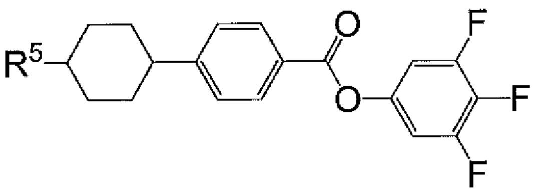

(4-10)

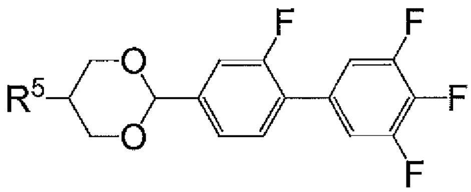

(4-11)

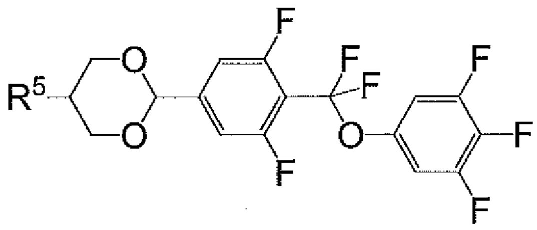

(4-12)

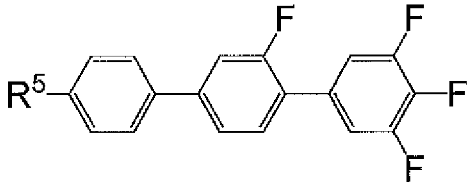

(4-13)

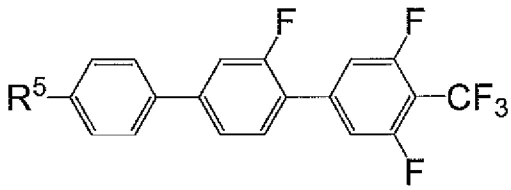

(4-14)

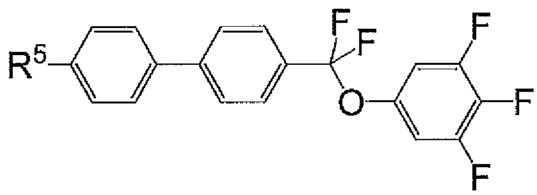

(4-15)

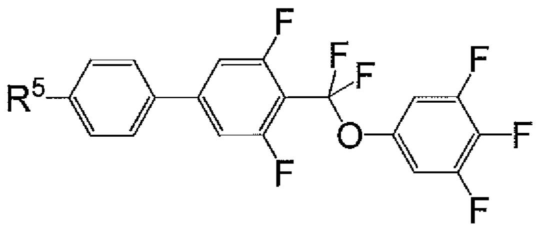

(4-16)

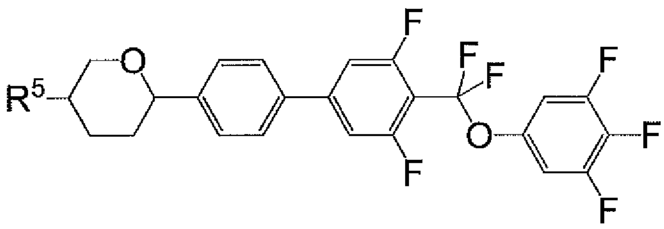

(4-17)

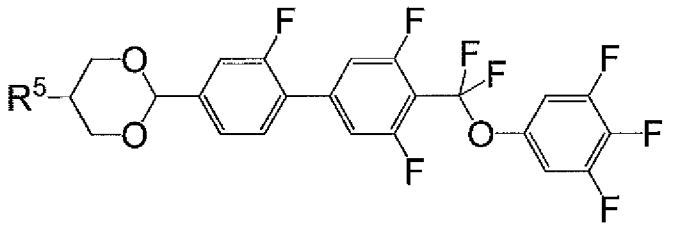

(4-18)

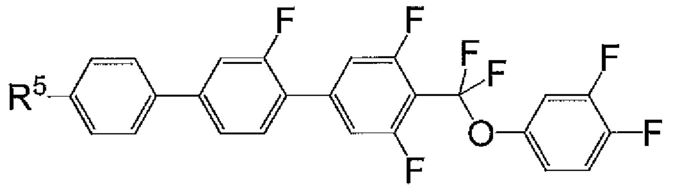

(4-19)

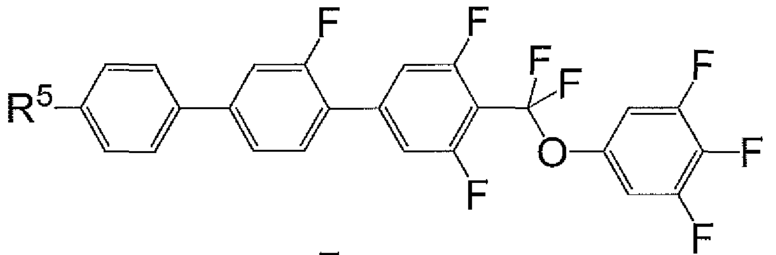

(4-20)

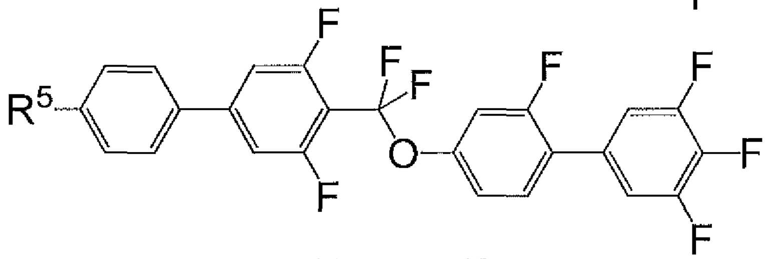

(4-21)

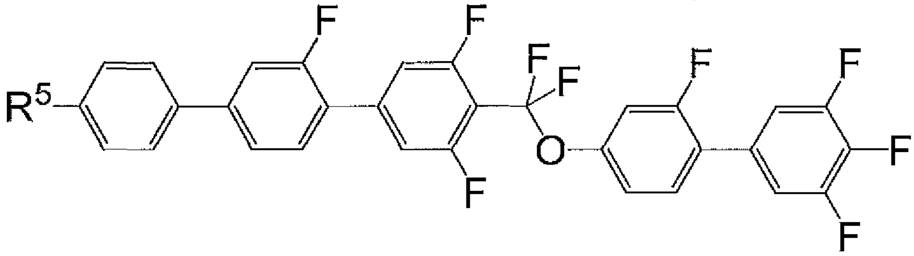

(4-22)

wherein, $R^5$ is alkyl having 1 to 12 carbons, alkoxy having 1 to 12 carbons or alkenyl having 2 to 12 carbons.

**11.** The liquid crystal composition according to claim 9 or 10, wherein a ratio of the fourth component is in the range of 10% by weight to 50% by weight based on the total weight of the liquid crystal composition.

**12.** The liquid crystal composition according to any one of claims 1 to 11, wherein a maximum temperature of a nematic phase is 80°C or higher, an optical anisotropy (measured at 25°C) at a wavelength of 589 nanometer is 0.07 or more and a dielectric anisotropy (measured at 25°C) at a frequency of 1 kHz is 10 or more.

**13.** A liquid crystal display device, including the liquid crystal composition according to any one of claims 1 to 12.

**14.** The liquid crystal display device according to claim 13, wherein an operating mode in the liquid crystal display device includes a TN mode, an ECB mode, an OCB mode, an IPS mode, a PSA mode or an FPA mode, and a driving mode in the liquid crystal display device includes an active matrix mode.

**15.** Use of the liquid crystal composition according to any one of claims 1 to 12 in a liquid crystal display device.

## Patentansprüche

**1.** Flüssigkristallzusammensetzung, die eine nematische Phase hat und mindestens eine Verbindung, die aus der Gruppe von durch Formel (1) wiedergegebenen Verbindungen ausgewählt, ist als eine erste Komponente enthält und mindestens eine Verbindung, die aus der Gruppe von durch Formel (2) wiedergegebenen Verbindungen ausgewählt ist, als eine zweite Komponente enthält:

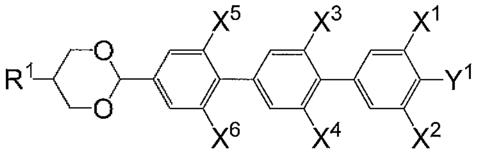

(1)

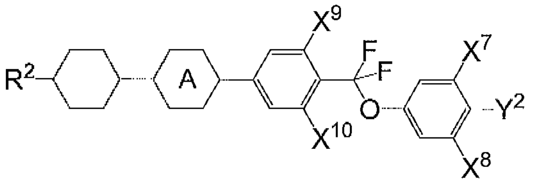

(2)

wobei $R^1$ und $R^2$ unabhängig Alkyl mit 1 bis 12 Kohlenstoffen, Alkoxy mit 1 bis 12 Kohlenstoffen oder Alkenyl mit 2 bis 12 Kohlenstoffen sind; Ring A 1,4-Phenylen, 2-Fluor-1,4-Phenylen oder 2,6-Difluor-1,4-phenylen ist; $X^1$, $X^2$, $X^3$, $X^4$, $X^5$, $X^6$, $X^7$, $X^8$, $X^9$ und $X^{10}$ unabhängig Wasserstoff oder Fluor sind und $Y^1$ und $Y^2$ unabhängig Fluor, Chlor, Trifluormethyl oder Trifluormethoxy sind;
unter der Bedingung, dass die folgenden Zusammensetzungen ausgenommen sind:

| | |
|---|---|
| 3-GB(F)B(F)B(F,F)-F | 3% |
| 4-GB(F)B(F,F)XD(F,F)-F | 8% |
| 2-GB(F, F)XB (F) B (F, F)-F | 10% |
| 3-GB(F,F)XB(F)B(F,F)-F | 8% |
| 4-GB(F,F)XB(F)B(F,F)-F | 8% |
| 5-GBB(F)B(F,F)XB(F,F)-F | 3% |
| 6-GB(F)B(F,F)XB(F)B(F,F)-F | 5% |
| 5-HB-CL | 3% |
| 2-HHB-CL | 3% |
| 3-HHB(F,F)-F | 3% |
| 5-HHEB(F,F)-F | 2% |
| 2-HBEB(F,F)-F | 3% |
| 3-HBB(F,F)-F | 5% |
| 3-BB(F)B(F,F)-F | 10% |
| 2-BB(F,F)XB(F,F)-F | 5% |
| 2-HHBB(F,F)-F | 5% |
| 3-HBBXB(F,F)-F | 5% |
| 4-BB(F)B(F,F)XB(F,F)-F | 3% |
| 4-BB(F)B(F,F)XB(F,F)-CF3 | 5% |
| 5-B(F)B(F,F)B(F,F)XB(F,F)-CF3 | 3% |

| | |
|---|---|
| 5-GB(F)B(F)B(F,F)-F | 5% |
| 5-GB(F)B(F,F)XB(F,F)-F | 5% |
| 2-GB(F,F)XB(F)B(F,F)-F | 10% |
| 3-GB(F,F)XB(F)B(F,F)-F | 5% |
| 4-GB(F,F)XB(F)B(F,F)-F | 10% |
| 5-GB(F,F)XB(F)B(F,F)-F | 5% |
| 3-HHB-CL | 5% |
| 3-HHXB(F,F)-F | 7% |
| 5-HBB-F | 3% |
| 3-HBB(F,F)-F | 5% |
| 3-HHBB(F,F)-F | 4% |
| 4-HHBB(F,F)-F | 5% |
| 4-HBBXB(F,F)-F | 5% |
| 4-B(F)B(F,CL)B(F,F)XB(F,F)-F | 7% |
| 5-B(F)B(F,CL)B(F,F)XB(F,F)-F | 8% |
| 6-B(F)B(F,CL)B(F,F)XB(F,F)-CF3 | 8% |
| 6-B(F,CL)B(F,F)XB(F)B(F,F)-F | 3% |

**2.** Flüssigkristallzusammensetzung gemäß Anspruch 1, die mindestens eine Verbindung, die aus der Gruppe von durch Formel (1-1) bis Formel (1-9) wiedergegebenen Verbindungen ausgewählt ist, als die erste Komponente enthält:

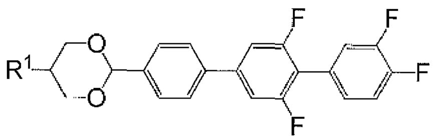

(1-1)

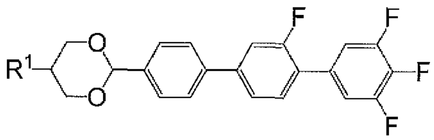

(1-2)

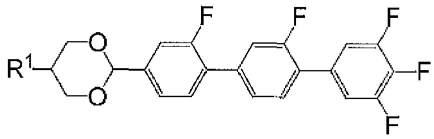

(1-3)

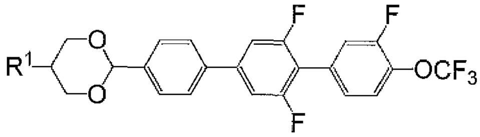

(1-4)

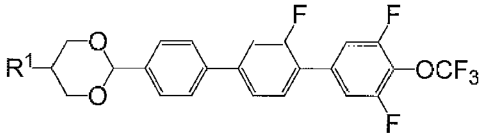
(1-5)

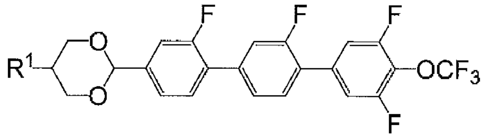
(1-6)

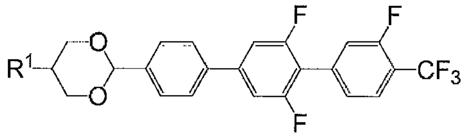
(1-7)

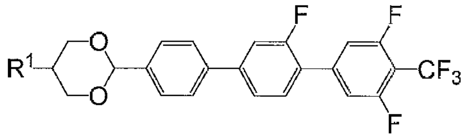
(1-8)

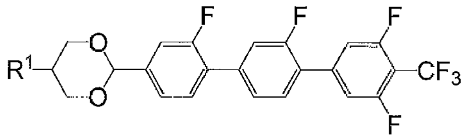
(1-9)

wobei $R^1$ Alkyl mit 1 bis 12 Kohlenstoffen, Alkoxy mit 1 bis 12 Kohlenstoffen oder Alkenyl mit 2 bis 12 Kohlenstoffen ist.

**3.** Flüssigkristallzusammensetzung gemäß Anspruch 1 oder 2, wobei die erste Komponente mindestens eine Verbindung ist, die aus der Gruppe von durch Formel (1-2) gemäß Anspruch 2 wiedergegebenen Verbindungen ausgewählt ist.

**4.** Flüssigkristallzusammensetzung gemäß einem der Ansprüche 1 bis 3, die mindestens eine Verbindung, die aus der Gruppe von durch Formel (2-1) bis Formel (2-3) wiedergegebenen Verbindungen ausgewählt ist, als die zweite Komponente enthält:

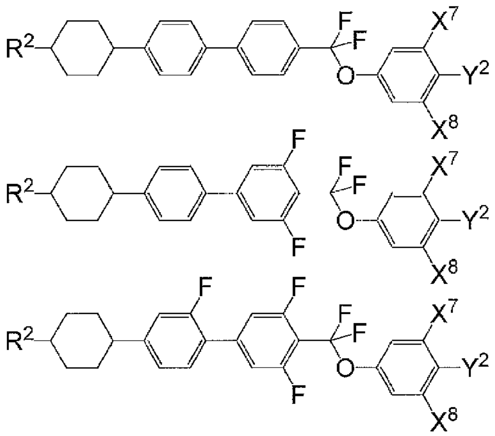
(2-1)

(2-2)

(2-3)

wobei $R^2$ Alkyl mit 1 bis 12 Kohlenstoffen, Alkoxy mit 1 bis 12 Kohlenstoffen oder Alkenyl mit 2 bis 12 Kohlenstoffen ist; $X^7$ und $X^8$ unabhängig Wasserstoff oder Fluor sind und $Y^2$ Fluor, Chlor, Trifluormethyl oder Trifluormethoxy ist.

**5.** Flüssigkristallzusammensetzung gemäß einem der Ansprüche 1 bis 4, wobei ein Anteil der ersten Komponente im Bereich von 5 Gewichtsprozent bis 30 Gewichtsprozent und ein Anteil der zweiten Komponente im Bereich von 5 Gewichtsprozent bis 30 Gewichtsprozent auf Basis des Gesamtgewichtes der Flüssigkristallzusammensetzung liegt.

**6.** Flüssigkristallzusammensetzung gemäß einem der Ansprüche 1 bis 5, die mindestens eine Verbindung, die aus der Gruppe von durch Formel (3) wiedergegebenen Verbindungen ausgewählt ist, als eine dritte Komponente enthält:

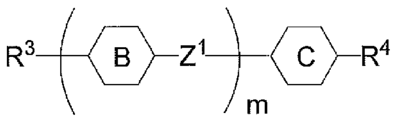

(3)

wobei $R^3$ und $R^4$ unabhängig Alkyl mit 1 bis 12 Kohlenstoffen, Alkoxy mit 1 bis 12 Kohlenstoffen, Alkenyl mit 2 bis 12 Kohlenstoffen, oder Alkenyl mit 2 bis 12 Kohlenstoffen, in dem mindestens ein Wasserstoff durch Fluor ersetzt ist, sind; Ring B und Ring C unabhängig 1,4-Cyclohexylen, 1,4-Phenylen, 2-Fluor-1,4-phenylen oder 2,5-Difluor-1,4-phenylen sind; $Z^1$ eine Einfachbindung, Ethylen oder Carbonyloxy ist und m = 1, 2 oder 3 ist.

**7.** Flüssigkristallzusammensetzung gemäß einem der Ansprüche 1 bis 6, die mindestens eine Verbindung, die aus der Gruppe von durch Formel (3-1) bis Formel (3-13) wiedergegebenen Verbindungen ausgewählt ist, als die dritte Komponente enthält:

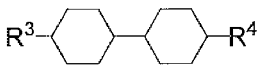

(3-1)

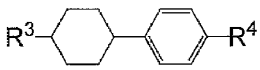

(3-2)

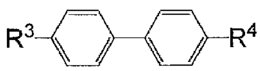

(3-3)

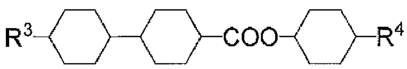

(3-4)

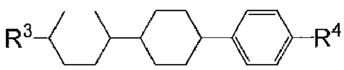

(3-5)

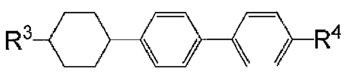

(3-6)

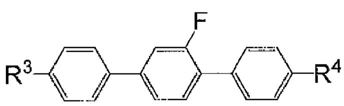

(3-7)

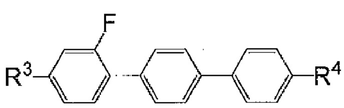

(3-8)

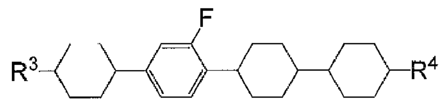

(3-9)

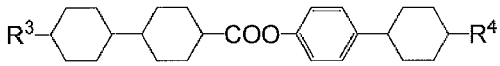

(3-10)

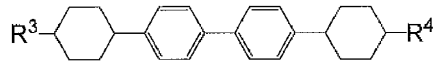

(3-11)

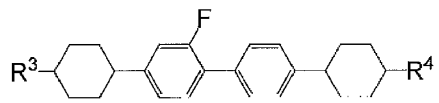

(3-12)

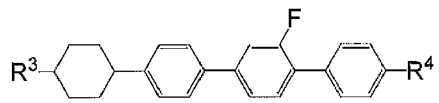

(3-13)

wobei $R^3$ und $R^4$ unabhängig Alkyl mit 1 bis 12 Kohlenstoffen, Alkoxy mit 1 bis 12 Kohlenstoffen, Alkenyl mit 2 bis 12 Kohlenstoffen, oder Alkenyl mit 2 bis 12 Kohlenstoffen, in dem mindestens ein Wasserstoff durch Fluor ersetzt ist, sind.

**8.** Flüssigkristallzusammensetzung gemäß Anspruch 6 oder 7, wobei ein Anteil der dritten Komponente im Bereich von 30 Gewichtsprozent bis 80 Gewichtsprozent auf Basis des Gesamtgewichtes der Flüssigkristallzusammensetzung liegt.

**9.** Flüssigkristallzusammensetzung gemäß einem der Ansprüche 1 bis 8, die mindestens eine Verbindung, die aus der Gruppe von durch Formel (4) wiedergegebenen Verbindungen ausgewählt ist, als eine vierte Komponente enthält:

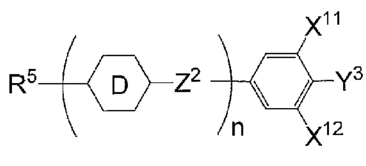

(4)

wobei $R^5$ Alkyl mit 1 bis 12 Kohlenstoffen, Alkoxy mit 1 bis 12 Kohlenstoffen oder Alkenyl mit 2 bis 12 Kohlenstoffen ist; Ring D 1,4-Phenylen, 2-Fluor-1,4-phenylen, 2,6-Difluor-1,4-phenylen, Tetrahydropyran-2,5-diyl oder Pyrimidin-2,5-diyl ist; $Z^2$ eine Einfachbindung, Ethylen, Carbonyloxy oder Difluormethylenoxy ist; $X^{11}$ und $X^{12}$ unabhängig Wasserstoff oder Fluor sind; $Y^3$ Fluor, Chlor, Trifluormethyl oder Trifluormethoxy ist und n = 1, 2, 3 oder 4 ist, Ring D, wenn n = 1 oder 2 ist, 1,4-Cyclohexylen oder 1,3-Dioxan-2,5-diyl sein kann und Ring D, wenn n = 3 oder 4 ist und mindestens ein $Z^2$ keine Einfachbindung ist, 1,3-Dioxan-2,5-diyl sein kann.

**10.** Flüssigkristallzusammensetzung gemäß einem der Ansprüche 1 bis 9, wobei die vierte Komponente mindestens eine Verbindung ist, die aus der Gruppe von durch Formel (4-1) bis Formel (4-22) wiedergegebenen Verbindungen ausgewählt ist:

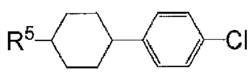

(4-1)

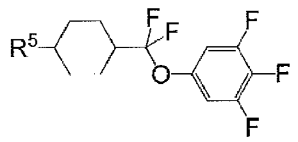

(4-2)

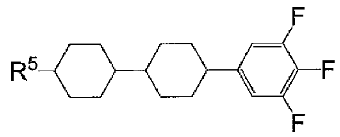

(4-3)

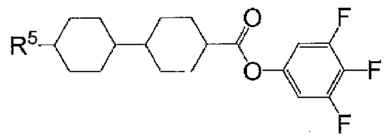

(4-4)

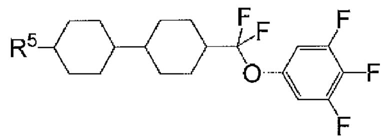

(4-5)

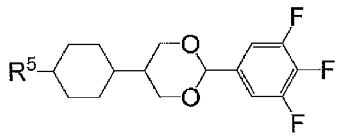

(4-6)

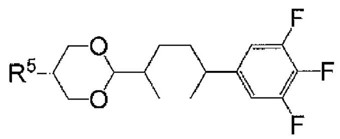

(4-7)

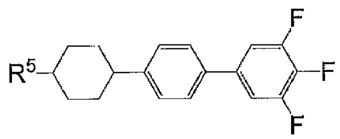

(4-8)

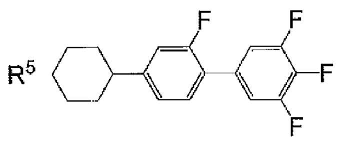

(4-9)

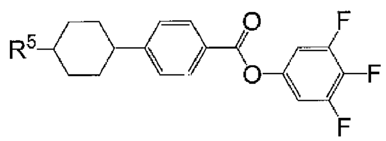

(4-10)

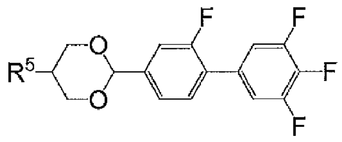

(4-11)

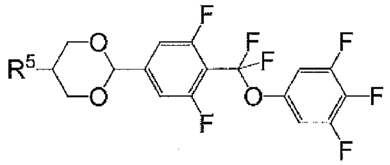

(4-12)

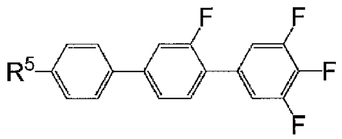

(4-13)

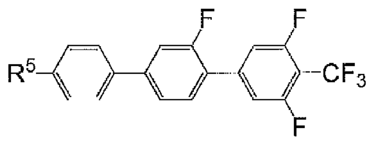

(4-14)

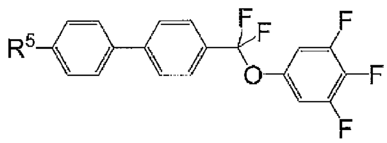

(4-15)

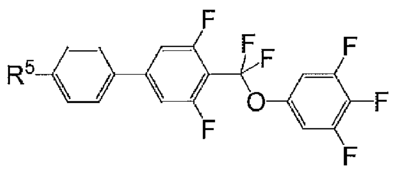

(4-16)

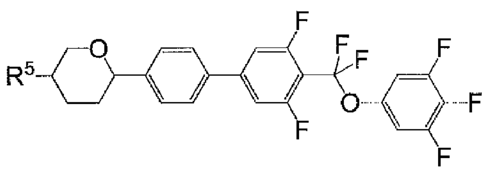

(4-17)

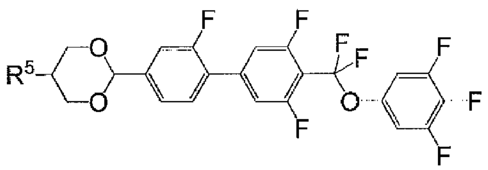

(4-18)

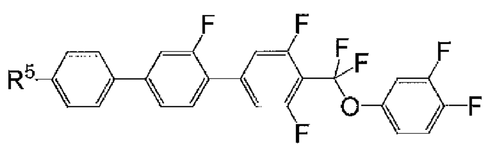

(4-19)

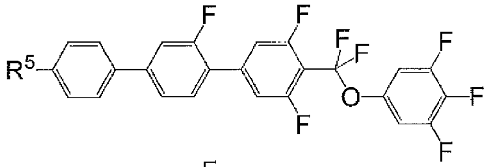

(4-20)

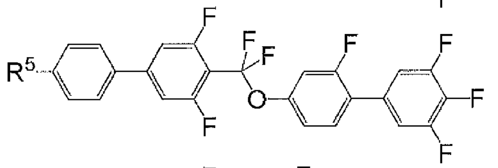

(4-21)

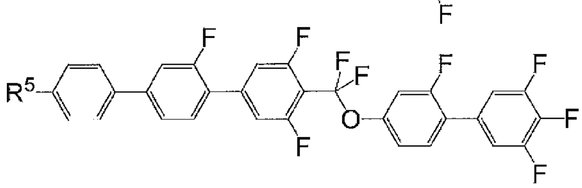

(4-22)

wobei $R^5$ Alkyl mit 1 bis 12 Kohlenstoffen, Alkoxy mit 1 bis 12 Kohlenstoffen oder Alkenyl mit 2 bis 12 Kohlenstoffen ist.

**11.** Flüssigkristallzusammensetzung gemäß Anspruch 9 oder 10, wobei ein Anteil der vierten Komponente im Bereich von 10 Gewichtsprozent bis 50 Gewichtsprozent auf Basis des Gesamtgewichtes der Flüssigkristallzusammensetzung liegt.

**12.** Flüssigkristallzusammensetzung gemäß einem der Ansprüche 1 bis 11, wobei eine Maximaltemperatur einer nematischen Phase 80°C oder höher ist, eine optische Anisotropie (gemessen bei 25°C) bei einer Wellenlänge von 589 Nanometern 0,07 oder mehr ist und eine dielektrische Anisotropie (gemessen bei 25°C) bei einer Frequenz von 1 kHz 10 oder mehr ist.

**13.** Flüssigkristallanzeigevorrichtung, die die Flüssigkristallzusammensetzung gemäß einem der Ansprüche 1 bis 12 aufweist.

**14.** Flüssigkristallanzeigevorrichtung gemäß Anspruch 13, wobei ein Betriebsmodus in der Flüssigkristallanzeigevorrichtung einen TN-Modus, einen ECB-Modus, einen OCB-Modus, einen IPS-Modus, einen PSA-Modus oder einen FPA-Modus aufweist und ein Ansteuerungsmodus in der Flüssigkristallanzeigevorrichtung einen Aktivmatrixmodus aufweist.

**15.** Verwendung der Flüssigkristallzusammensetzung gemäß einem der Ansprüche 1 bis 12 in einer Flüssigkristallanzeigevorrichtung.

**Revendications**

**1.** Composition à base de cristaux liquides ayant une phase nématique et contenant au moins un composé sélectionné dans le groupe de composés représentés par la formule (1) comme premier composant et au moins un composé sélectionné dans le groupe de composés représentés par la formule (2) comme second composant :

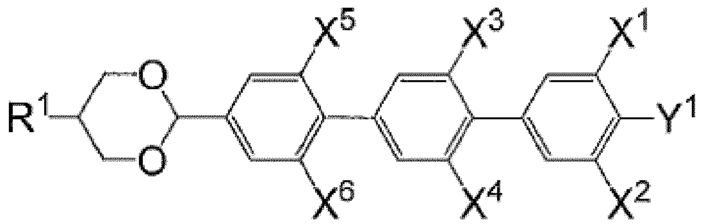

(1)

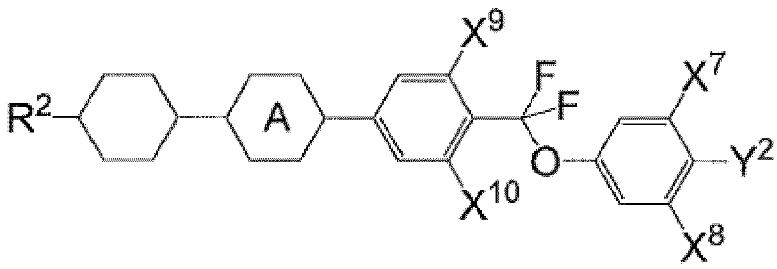

(2)

dans laquelle $R^1$ et $R^2$ sont de façon indépendante un alkyle ayant de 1 à 12 carbones, un alkoxy ayant de 1 à 12 carbones ou un alkényle ayant de 2 à 12 carbones ; l'anneau A est le 1,4-phénylène, le 2-fluoro-1,4-phénylène ou le 2,6-difluoro-1,4-phénylène ; $X^1$, $X^2$, $X^3$, $X^4$, $X^5$, $X^6$, $X^7$, $X^8$, $X^9$ et $X^{10}$ sont de façon indépendante l'hydrogène ou le fluor ; et $Y^1$ et $Y^2$ sont de façon indépendante le fluor, le chlore, le trifluorométhyle ou le trifluorométhoxy ;
avec la restriction que les compositions suivantes sont exclues :

| | |
|---|---|
| 3-GB (F) B (F) B (F, F) - F | 3% |
| 4-GB (F) B (F, F) XB (F, F) - F | 8% |
| 2-GB (F, F) XB (F) B (F, F) - F | 10% |
| 3-GB (F, F) XB (F) B (F, F) - F | 8% |
| 4-GB (F, F) X B (F) B (F, F) - F | 8% |
| 5-GBB (F) B (F, F) XB (F, F) - F | 3% |
| 6-GB (F) B (F, F) XB (F) B (F, F) - F | 5% |
| 5-HB-CL | 3% |
| 2-HHB-CL | 3% |
| 3-HHB (F, F) - F | 3% |
| 5-HHEB (F, F) - F | 2% |
| 2-HBEB (F, F) - F | 3% |
| 3-HBB (F, F) - F | 5% |
| 3-BB (F) B (F, F) - F | 10% |
| 2-BB (F, F) XB (F, F) -F | 5% |
| 2-HHBB (F, F) - F | 5% |
| 3-HBBXB (F, F) - F | 5% |
| 4-BB (F) B (F, F) XB (F, F) - F | 3% |
| 4-BB (F) B (F, F) XB (F, F) - CF3 | 5% |
| 5-B (F) B (F, F) B (F, F) XB (F, F) - CF3 | 3% |

| | |
|---|---|
| 5-GB (F) B (F) B (F, F) - F | 5% |
| 5-GB (F) B (F, F) XB (F, F) -F | 5% |
| 2-GB (F, F) XB (F) B (F, F) - F | 10% |
| 3-GB (F, F) XB (F) B (F, F) - F | 5% |
| 4-GB (F, F) XB (F) B (F, F) - F | 10% |
| 5-GB (F, F) XB (F) B (F, F) - F | 5% |

(suite)

| | |
|---|---|
| 3-HHB-CL | 5% |
| 3-HHXB (F, F) - F | 7% |
| 5-HBB-F | 3% |
| 3-HBB (F, F) - F | 5% |
| 3-HHBB (F, F) - F | 4% |
| 4-HHBB (F, F) - F | 5% |
| 4-HBBXB (F, F) - F | 5% |
| 4-B (F) B (F, CL) B (F, F) XB (F, F) - F | 7% |
| 5-B (F) B (F, CL) B (F, F) XB (F, F) - F | 8% |
| 6-B (F) B (F, CL) B (F, F) XB (F, F) - CF3 | 8% |
| 6-B (F, CL) B (F, F) XB (F) B (F, F) - F | 3% |

**2.** Composition à base de cristaux liquides selon la revendication 1, contenant au moins un composé sélectionné dans le groupe de composés représentés par la formule (1-1) à la formule (1-9) comme premier composant :

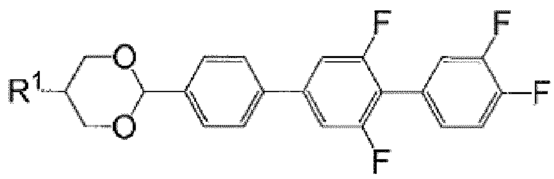

(1-1)

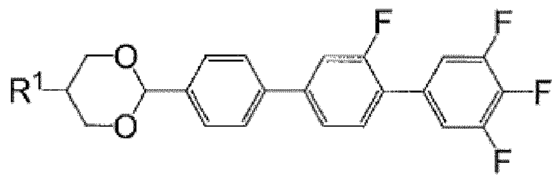

(1-2)

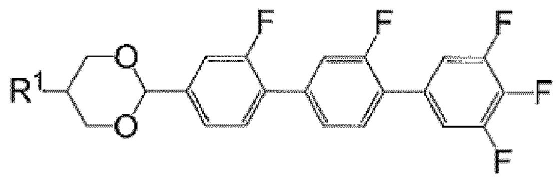

(1-3)

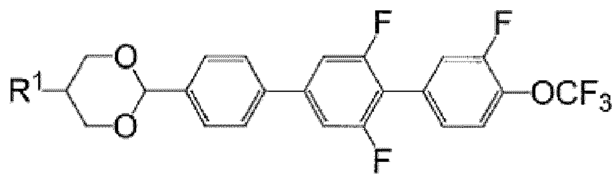

(1-4)

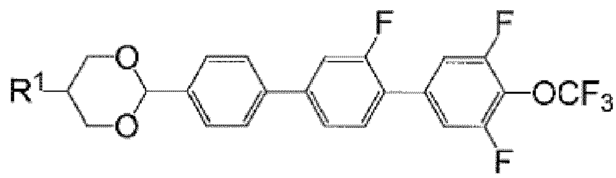

(1-5)

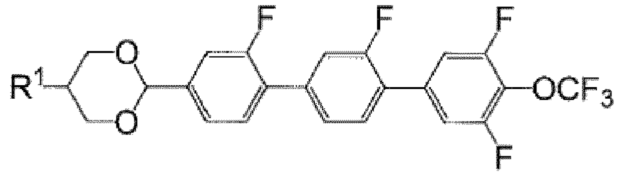

(1-6)

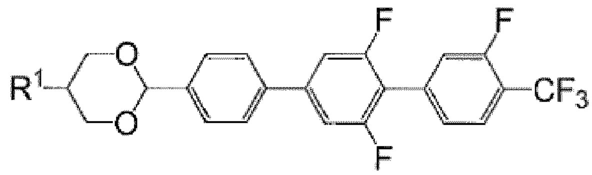

(1-7)

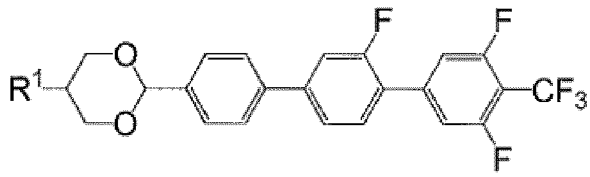

(1-8)

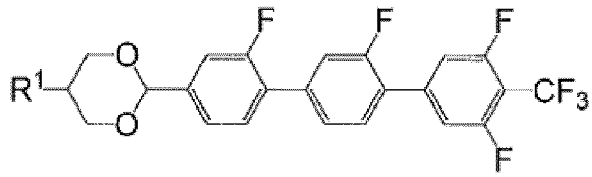

(1-9)

dans laquelle $R^1$ est un alkyle ayant de 1 à 12 carbones, un alkoxy ayant de 1 à 12 carbones ou un alkényle ayant de 2 à 12 carbones.

**3.** Composition à base de cristaux liquides selon la revendication 1 ou 2, dans laquelle le premier composant est au moins un composé sélectionné dans le groupe de composés représentés par la formule (1-2) selon la revendication 2.

**4.** Composition à base de cristaux liquides selon l'une quelconque des revendications 1 à 3, contenant au moins un composé sélectionné dans le groupe de composés représentés par la formule (2-1) à la formule (2-3) comme second composant :

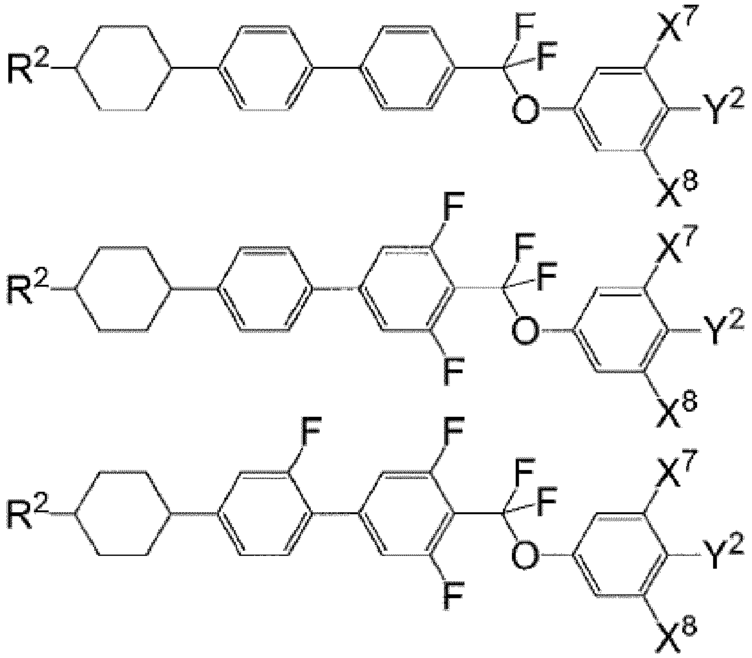

(2-1)

(2-2)

(2-3)

dans laquelle $R^2$ est un alkyle ayant de 1 à 12 carbones, un alkoxy ayant de 1 à 12 carbones ou un alkényle ayant de 2 à 12 carbones ; $X^7$ et $X^8$ sont chacun de façon indépendante l'hydrogène ou le fluor ; et $Y^2$ est le fluor, le chlore, le trifluorométhyle ou le trifluorométhoxy.

**5.** Composition à base de cristaux liquides selon l'une quelconque des revendications 1 à 4, dans laquelle un ratio du premier composant est compris entre 5% en poids et 30% en poids, et un ratio du second composant est compris entre 5% en poids et 30% en poids, sur la base du poids total de la composition à base de cristaux liquides.

**6.** Composition à base de cristaux liquides selon l'une quelconque des revendications 1 à 5, contenant au moins un composé sélectionné dans le groupe de composés représentés par la formule (3) comme troisième composant :

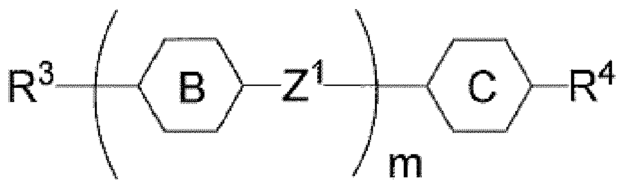

(3)

dans laquelle $R^3$ et $R^4$ sont de façon indépendante un alkyle ayant de 1 à 12 carbones, un alkoxy ayant de 1 à 12 carbones, un alkényle ayant de 2 à 12 carbones, ou un alkényle ayant de 2 à 12 carbones dans lequel au moins l'un des hydrogènes est remplacé par le fluor ; l'anneau B et l'anneau C sont de façon indépendante le 1,4-cyclohexylène, le 1,4-phénylène, le 2-fluoro-1,4-phénylène ou le 2,5-difluoro-1,4-phénylène ; $Z^1$ est une liaison unique, l'éthylène ou le carbonyloxy ; et m est 1, 2 ou 3.

**7.** Composition à base de cristaux liquides selon l'une quelconque des revendications 1 à 6, contenant au moins un composé sélectionné dans le groupe de composés représentés par la formule (3-1) à la formule (3-13) comme troisième composant :

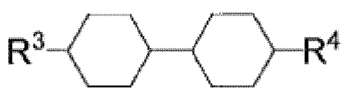

(3-1)

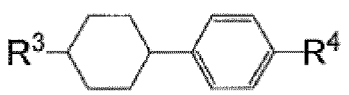

(3-2)

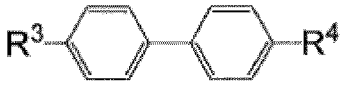

(3-3)

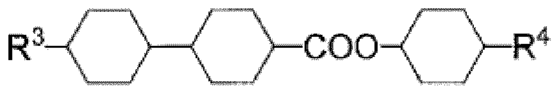

(3-4)

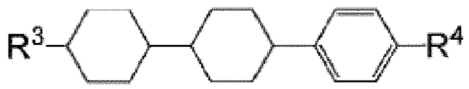

(3-5)

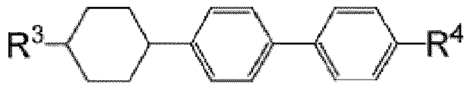

(3-6)

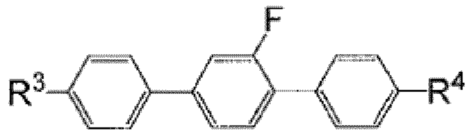

(3-7)

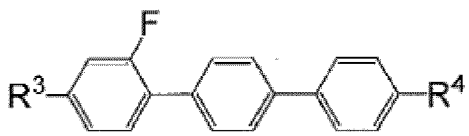

(3-8)

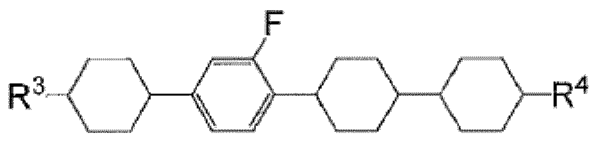

(3-9)

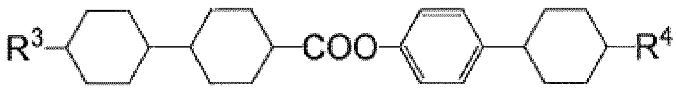

(3-10)

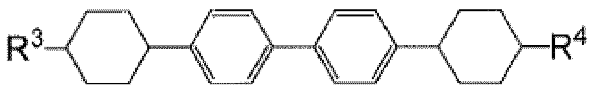

(3-11)

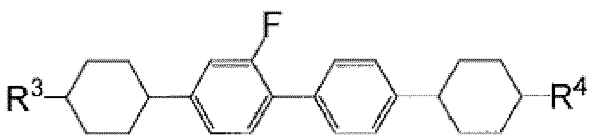

(3-12)

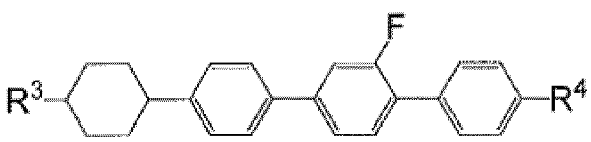

(3-13)

dans laquelle $R^3$ et $R^4$ sont de façon indépendante un alkyle ayant de 1 à 12 carbones, un alkoxy ayant de 1 à 12 carbones, un alkényle ayant de 2 à 12 carbones ou un alkényle ayant de 2 à 12 carbones dans lequel au moins l'un des hydrogènes est remplacé par le fluor.

**8.** Composition à base de cristaux liquides selon la revendication 6 ou 7, dans laquelle un ratio du troisième composant est compris entre 30% en poids et 80% en poids sur la base du poids total de la composition à base de cristaux liquides.

**9.** Composition à base de cristaux liquides selon l'une quelconque des revendications 1 à 8, contenant au moins un composé sélectionné dans le groupe de composés représentés par la formule (4) comme quatrième composant :

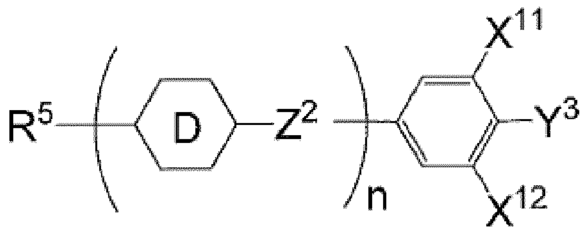

(4)

dans laquelle $R^5$ est un alkyle ayant de 1 à 12 carbones, un alkoxy ayant de 1 à 12 carbones ou un alkényle ayant de 2 à 12 carbones ; l'anneau D est le 1,4-phénylène, le 2-fluoro-1,4-phénylène, le 2,6-difluoro-1,4-phénylène ; le tétrahydropyrane-2,5-diyl ou la pyrimidine-2,5-diyl ; $Z^2$ est une liaison unique, l'éthylène, le carbonyloxy ou le difluorométhyleneoxy ; $X^{11}$ et $X^{12}$ sont de façon indépendante l'hydrogène ou le fluor ; $Y^3$ est le fluor, le chlore, le trifluorométhyle ou le trifluorométhoxy ; et n est 1, 2, 3 ou 4, l'anneau D lorsque n est 1 ou 2 peut être le 1,4-cyclohexylène ou le 1,3-dioxane-2,5-diyl, et l'anneau D lorsque n est 3 ou 4 et au moins l'un des $Z^2$ n'est pas une liaison unique peut être le 1,3-dioxane-2,5-diyl.

**10.** Composition à base de cristaux liquides selon l'une quelconque des revendications 1 à 9, dans laquelle le quatrième composant est au moins un composé sélectionné dans le groupe de composés représenté par la formule (4-1) à la formule (4-22) :

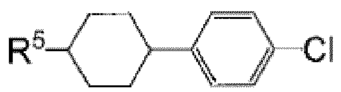

(4-1)

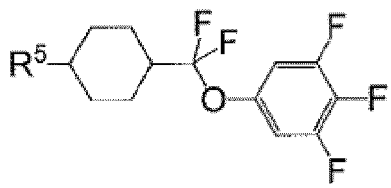

(4-2)

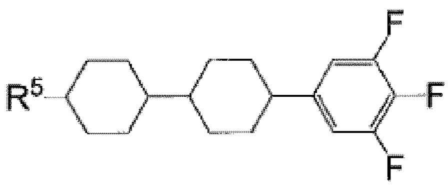

(4-3)

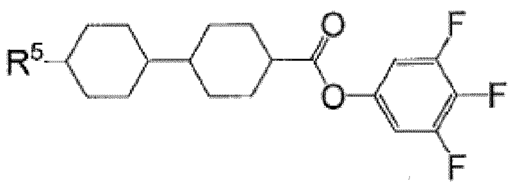

(4-4)

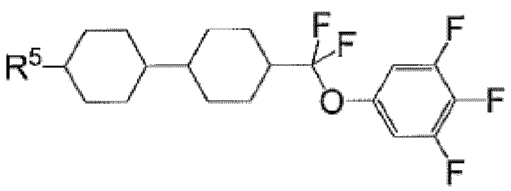

(4-5)

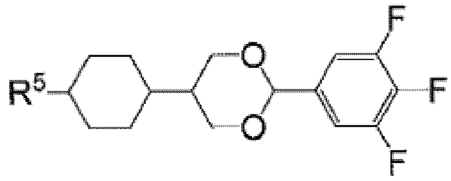

(4-6)

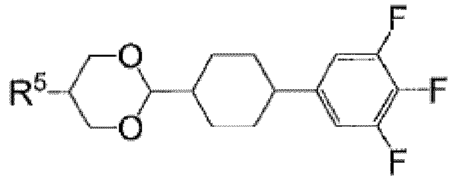

(4-7)

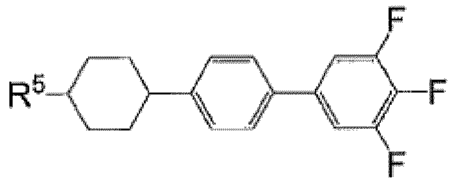

(4-8)

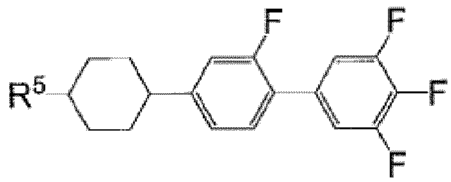

(4-9)

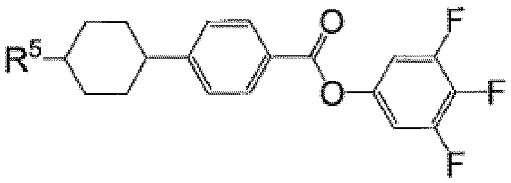

(4-10)

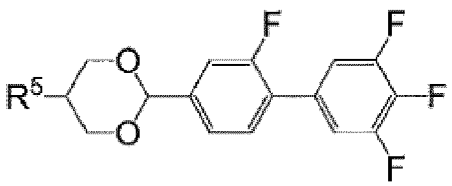

(4-11)

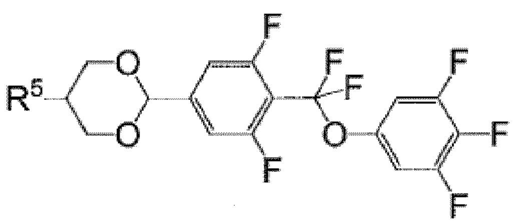

(4-12)

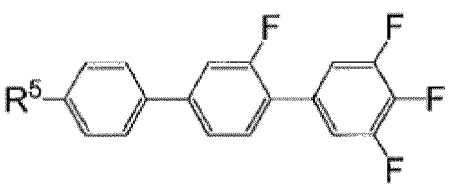

(4-13)

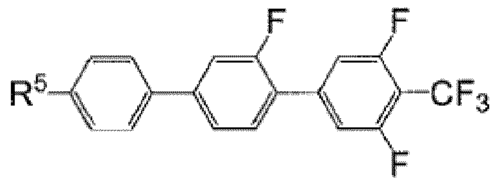

(4-14)

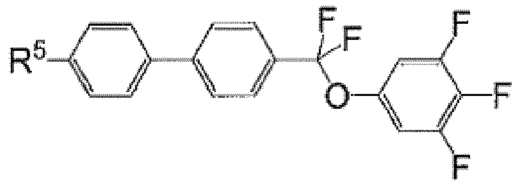

(4-15)

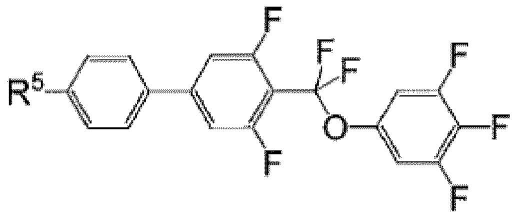

(4-16)

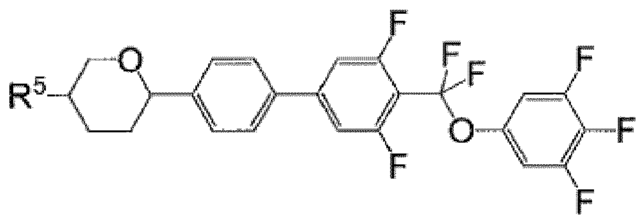

(4-17)

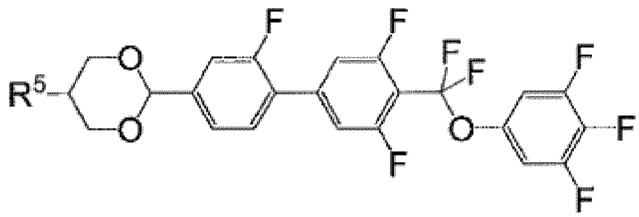

(4-18)

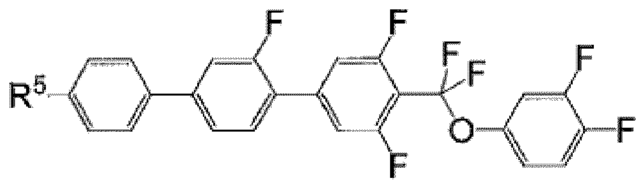

(4-19)

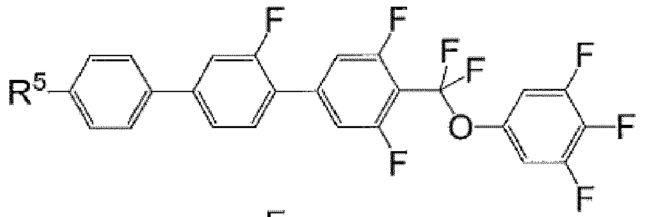

(4-20)

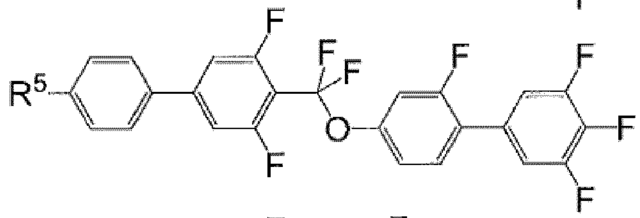

(4-21)

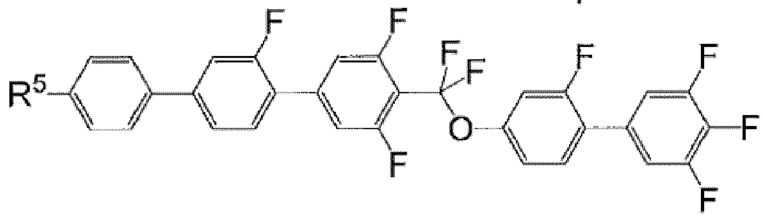

(4-22)

dans laquelle $R^5$ est un alkyle ayant de 1 à 12 carbones, un alkoxy ayant de 1 à 12 carbones ou un alkényle ayant de 2 à 12 carbones.

**11.** Composition à base de cristaux liquides selon la revendication 9 ou 10, dans laquelle un ratio du quatrième composant est compris entre 10% en poids et 50% en poids sur la base du poids total de la composition à base de cristaux liquides.

**12.** Composition à base de cristaux liquides selon l'une quelconque des revendications 1 à 11, dans laquelle une température maximale d'une phase nématique est 80°C ou plus, une anisotropie optique (mesurée à 25°C) à une longueur d'onde de 589 nanomètres est de 0,07 ou plus et une anisotropie diélectrique (mesurée à 25°C) à une fréquence de 1 kHz est 10 ou plus.

**13.** Dispositif d'affichage à base de cristaux liquides, incluant la composition à base de cristaux liquides selon l'une quelconque des revendications 1 à 12.

**14.** Dispositif d'affichage à base de cristaux liquides selon la revendication 13 dans lequel un mode de fonctionnement dans le dispositif d'affichage à base de cristaux liquides inclut un mode TN, un mode ECB, un mode OCB, un mode IPS, un mode PSA ou un mode FPA et un mode d'excitation dans le dispositif d'affichage à base de cristaux liquides inclut un mode de matrice active.

**15.** Utilisation de la composition à base de cristaux liquides selon l'une quelconque des revendications 1 à 12 dans un dispositif d'affichage à base de cristaux liquides.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011052120 A
- WO 2011162142 A1
- EP 2757139 A1
- JP 2001003053 A
- WO 2012043145 A
- WO 2011082742 A
- JP 2011514410 A
- JP H10081679 A
- JP 2011516628 A
- JP H10251186 A
- JP S5970624 A
- JP H2233626 A
- US 3660505 B


### Non-patent literature cited in the description


- Organic Syntheses. John Wiley & Sons, Inc,
- Organic Reactions. John Wiley & Sons, Inc,
- Comprehensive Organic Synthesis. Pergamon Press
- New Experimental Chemistry Course (Shin Jikken Kagaku Koza in Japanese). Maruzen Co. , Ltd,
- **M. IMAI et al.** *Molecular Crystals and Liquid Crystals,* 1995, vol. 259, 37